(19) **Europäisches Patentamt / European Patent Office / Office européen des brevets**

(11) **EP 3 979 551 A1**

(12) # EUROPEAN PATENT APPLICATION
published in accordance with Art. 153(4) EPC

(43) Date of publication:
**06.04.2022 Bulletin 2022/14**

(21) Application number: **20919697.1**

(22) Date of filing: **18.02.2020**

(51) International Patent Classification (IPC):
**H04L 9/00** $^{(2022.01)}$

(52) Cooperative Patent Classification (CPC):
**H04L 9/00**

(86) International application number:
**PCT/ES2020/070111**

(87) International publication number:
**WO 2021/165551 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Freeverse, S.L.**
**08034 Barcelona (ES)**

(72) Inventors:
• **MATEOS SOLE, Antonio**
  **08034 Barcelona (ES)**
• **SINISCALCHI, Alessandro**
  **08034 Barcelona (ES)**

(74) Representative: **Mohammadian, Dario**
**KUKATI**
**Apartado de Correos 34031**
**08080 Barcelona (ES)**

(54) **SYSTEM AND METHOD FOR DYNAMIC COMPUTATION SCALING IN DISTRIBUTED LEDGER NETWORKS**

(57) Different aspects of the invention implement an enhanced DLT system, and corresponding method, that allows the execution of DApps that generate huge amounts of data to be stored in the DLT network in an efficient and optimized manner, also allowing the dynamic allocation of resources according to the properties of each DApp to be implemented. By allowing the interface between any type of existing layer 1 DLT network, it does not require the complex, slow, costly and highly risk process involved in the generation of a new layer 1 DLT network. It opens up the range of possible applications of the DLT network to applications in Big Data, IOT, Web 3, MMOG, or any other environment that needs the trust provided by the immutability of data stored in the DLT network.

FIG. 1

EP 3 979 551 A1

**Description**

**TECHNICAL FIELD**

The invention pertains generally to the field of telecommunications and, in particular, relates to a system and method for the dynamic scaling of computations in distributed ledger networks.

**BACKGROUND ART**

Distributed Ledger Networks, hereinafter DLT *"Distributed Ledger Technologies"*) networks, allow networks of computers to share an incorruptible and immutable database by storing identical copies of the records in a distributed manner on a large number of computers. They also allow computers to communicate with each other directly, peer-to-peer. Among the various types of such networks, there are those that offer more security, but are slow and expensive. Conversely, those that are faster and cheaper are at the same time the least secure. One type of DLT is blockchain networks, hereinafter blockchain, BC, which store distributed records in the form of a blockchain.

A variety of DLT network platforms exist today, with different configurations, for example, delimiting which types of computers can join the network, and, crucially, which have write privileges. Depending on the use case, a DLT network can be implemented, at one end, publicly and non-permissioned (among which is Ethereum), and at the other end, privately and permissioned (such as those implemented by companies for their internal processes). Public networks are open to inspection by everyone and at the same time are non-permissioned, allowing anyone to join with their electronic device, and operate as just another node within the network. Private networks, on the other hand, only allow certain pre-validated users to access the records distributed on it, and are permissioned, allowing only validated users to participate as nodes in the network.

One such public, non-permissioned network is Ethereum, whose main contribution allows the contents of distributed records to contain not only passive information but additionally program code that acts on input information to generate output information. Each unit of code (or program module, or digital media) that executes actions automatically like a computer program is called a *"smart contract"*. In other words, Ethereum is a huge computer distributed across thousands of nodes capable of executing countless smart contracts autonomously and automatically. Following the rules stipulated by the program code, instructions are executed that change the state of the algorithm. The distributed registers are updated at a certain time to reflect all the same information, that is the result of the computation and the current state within the battery of possible states. Each node maintains a virtual machine in exactly the same state as the other nodes. The update time additionally comprises any sub-processes of verification and correction of irregularities. DLT technology makes it possible to safeguard the integrity of the joint database, in the form of records, by aligning most of the network nodes to behave as dictated by the established protocol.

A node comprises at least one data processing device that can be programmed and that receives input data to execute according to program rules to generate output data while advancing the state in which it is located. Thus, a node may typically be a computer, or a server, although it may also be any electronic device, such as a cell phone, or a sensor with computational capabilities.

There are additionally at least two different types of nodes depending on the amount and/or type of information stored in their distributed records. Full nodes store the entire historical record, from the first block to the last one validated by the network. Light nodes require less computational and memory resources, since they do not act on a complete record, but only store the last records, or compressed equivalents of them, or a small part of all records, for example the header. Light nodes have a rather dynamic functionality, allowing them to act on information very quickly, while it is the complete nodes that give DLT networks their property of incorruptibility and immutability.

The characteristics of transparency and immutability of public and non-permissioned networks generate maximum trust among all actors in the system, in particular the users who use the network. On the one hand, the content of the blocks and the exchange of information and results stored therein can be verified openly and without hindrance. On the other hand, the program code that manages the platform can be verified, to check whether or not they are in accordance with the rules stipulated therein. For example, you can check whether there is a procedure for detecting and correcting irregularities. In the worst case, such irregularities may be due to actors trying to cheat the network in order to take advantage of it in some way.

In fact, one of the most relevant properties of DLT networks is precisely their ability to detect and eliminate such risks, since they are designed based on the principle of zero trust, that is, they assume that no user of the network trusts any other user while engaging in communications, information exchange, and corresponding actions. Such platforms are designed in such a way that they can operate with some peace of mind despite this distrust because they incorporate processes based on mathematical models, for example, game theory, and incentives, to motivate the various nodes in the network to operate according to the stipulated rules in an honest manner, while promoting cross-checking of all the nodes in the network to ensure that no one is trying to cheat the system.

Due to this development, some DLT networks have been generated based on the same principles, of which Ethereum is just one example, and which the skilled person will be able to recognize by studying the corresponding opensource code. Such DLT networks, public and non-permissioned, which we will call layer 1, or network 1, allow new nodes to recreate the current state of the network by starting their virtual machine and executing each line of code dictated by the shared database until the last one, reproducing the history of events and occurrences, until replicating the current state of the other nodes in the network. In the following, these DLT networks are called programmable distributed ledger networks.

Each node can also arbitrarily transmit code to a network 1, that is, to the virtual machine composed of all its nodes, which is similar to uploading an application to the shared computer, generating what are known as decentralized applications (DApps). DApps have become extremely popular lately as they inherit the intrinsic advantages of the underlying DLT network, that is, the incorruptibility of the processes, the layer of trust granted to each actor in the system, the fact that the code is unstoppable and runs without interruption automatically, among others.

To prevent malicious attacks on a global computing system of this caliber, a system of economic cost, or micropayments, has been integrated to ensure that only honest users use the system as they are spending their own resources. Some networks require this micropayment when executing an interaction with the DLT network. In the jargon of this technical field each interaction is also known as a transaction, and comprises sending or receiving data, where the data can be program code to update the smart contract or it can be the input or output data related to the smart contract, or any other type of information that is desired to be stored immutably. The disadvantage associated with maximizing the integrity of the shared database is related to the fact that each complete node must itself verify the validity of new data being added to the database. Fundamentally, this amounts to limiting the overall network of shared computers to what a single computer is capable of running.

The use of the most secure layer 1 DLT networks, to take advantage of their respective benefits, comes at a price, both for the user and for the overall network as a whole. For the user, the more code, the more data, the more interactions with the DLT network, the greater the sum of micropayments to be made. For the whole of layer 1, whose responsibility is to process the code required by all the DApps at the same time, the saturation and/or collapse comes as soon as some of these DApps require a greater amount of aggregate processing than a single computer would be able to handle.

The scalability problem is worsened by the additional cost problem. The cost of running DApps on network 1 is proportional to the computational load and number of transactions required to run it. In the case of the Ethereum network, these costs are called gas, or gas *rate.* Each transaction or interaction, such as a write action, or an arithmetic action, has a cost assigned to it in terms of gas. Regardless of who pays this cost, whether it is the DApp users or the DApp managers, the cumulative costs increase the overall costs beyond what is, in practice, feasible. In addition, these solutions require DApp users to be permanently connected online, monitoring the various networks to ensure secure operation, as would be the case with technology based on State Channels and Lightning Networks.

Many DApps have been designed to take advantage of only the most important nuclear advantage of layer 1 DLT networks, which is the trust generated by their immutable and transparent nature when storing information. Such DApps delegate the execution of the rest of the actions, or code necessary, to carry out their specific applications to external DLT networks. An example of such outsourcing is Plasma-type strategies, in which a second DLT network is used to offload part of the computations or storage from the layer 1 network. First of all, the generation of a new DLT network involves very significant risks, jeopardizing the very integrity of this type of network. In addition, only a very small range of applications is allowed, namely those that perform extremely heavy and infrequent computations, in which the external network must interact with network 1 very infrequently. Thus, scalability problems are not solved by outsourcing heavy computation in this way, since the external DLT network suffers from similar problems as the primary DLT network.

Therefore, the idea of uploading DApp programs to any layer 1 DLT network, and expecting it to support, for example, thousands of instructions and write actions received from millions of users simultaneously, is absolutely beyond the reach of any current system. For these reasons, layer 1 networks are limited to very infrequent updates, so that decentralized applications that require perhaps less heavy and intensive computations, but more, or much more, frequent ones, cannot be executed using this configuration. In other words, there is currently no DLT system that can host and run a DApp that requires continuous interaction with many users, and that needs to update its immutable records constantly.

## SUMMARY OF THE INVENTION

It is an object of the invention to provide solutions to all, or part of, the above problems. In particular, it is an object of the invention to provide a system, and corresponding method, of enhanced DLT that allows the execution of DApps requiring an amount of operations, and/or the use of an amount of permanent memory, outside the scope of a conventional DLT network, in an efficient and optimized manner. The features of the invention allow the dynamic allocation of resources according to the properties of each DApp to be implemented.

This is achieved by implementing computations by an external set of computers, called executor nodes, or simply executors. This set is made up of nodes that are configured to interact with network 1, to read data from it, to perform computations according to rules set in the program modules and layer 1 storage media, and to send the results of the computations to the layer 1 networks. The fact that the executing nodes do not form a DLT network avoids the complex, time-consuming, costly and highly risky process of generating a new DLT network. Also, the layer 1 network can delegate only concrete, not generic, computations, thus allowing the specialization of the layer 2 nodes, making it possible to scale concrete DApps.

By allowing interfacing with any type of existing layer 1 DLT network, it allows this invention to be used to scale DApps to be deployed on any layer 1 DLT network deemed convenient. Also, it does not require users of the DApps to be permanently connected, monitoring the various networks to ensure secure operation. This opens up the range of possible applications of the DLT network to a huge amount of applications according to the needs of society, covering much more than carrying out DLT payments, for example, applications in Big Data environments, IOT, Web 3, MMOG, or any other that needs the confidence provided by the immutability of data stored in the DLT network.

It is therefore an object of the invention to provide an enhanced programmable distributed ledger network for running decentralized applications.

It is another object of the invention to provide a method for executing decentralized applications on an enhanced programmable distributed ledger network.

It is another object of the invention to provide an executor node for running decentralized applications.

It is another object of the invention to provide a method in an executor node for executing decentralized applications.

It is another object of the invention to provide an enhanced DLT system for running decentralized applications.

It is another object of the invention to provide a method of executing decentralized applications in an enhanced DLT system.

It is another object of the invention to provide a computer program comprising instructions which, once executed on a processor, carry out the steps of a method in an enhanced DLT system.

It is another object of the invention to provide a computer readable medium comprising instructions which, once executed on a processor, carry out the steps of a planning method in an enhanced DLT system.

The invention provides methods and devices that implement various aspects, embodiments, and features of the invention, and are implemented by various means. The various means may comprise, for example, hardware, software, firmware, or a combination thereof, and any one, or combination of, the various means may implement these techniques.

For a hardware implementation, the various means may comprise processing units implemented on one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform described functions, or a combination thereof.

For a software implementation, the various means may comprise modules (for example, processes, functions, and so forth) that perform the described functions. The software code may be stored in a memory unit and executed by a processor. The memory unit may be implemented within the processor or external to the processor. In the context of this description, the term digital media also refers to modules or program code (other than a hardware implementation).

Various aspects, configurations, and embodiments of the invention are described. In particular, the invention provides methods, apparatuses, systems, processors, program code, computer readable media, and other apparatuses and elements that implement various aspects, configurations, and features of the invention, such as described in the following.

**BRIEF DESCRIPTION OF THE DRAWINGS**

The features and advantages of the present invention will become more apparent from the detailed description which follows in conjunction with the drawings, in which like reference characters identify corresponding elements in different drawings. Corresponding elements may also be referenced by different characters.

**FIG. 1** shows an enhanced DLT system according to one embodiment of the invention.
**FIG. 2** shows an enhanced DLT system according to another embodiment of the invention.
**FIG. 3** shows program modules deployed in each network according to one aspect of the invention.
**FIG. 4** shows the enhanced DLT system according to another embodiment of the invention.
**FIG. 5** shows the program modules deployed in each network according to one aspect of the invention.
**FIG. 6** refers to a deployment method of the enhanced DLT system according to one embodiment of the invention.
**FIG. 7** refers to an operating method of the enhanced DLT system according to an embodiment of the invention.

**FIG. 8** refers to a security method of the enhanced DLT system according to an embodiment of the invention.
**FIG. 9** refers to stages of the operating method of the enhanced DLT system carried out by the network modules 1 in each computing cycle.
**FIG. 10** refers to the stages of the operating method of the enhanced DLT system carried out by the set of executing nodes of network 2 in each computing cycle.
**FIG. 11** shows examples of different implementations of the computation result.

## DETAILED DESCRIPTION OF THE INVENTION

As mentioned above, the computations required to simulate the number of actions by a layer 1 network with high periodicity is simply too large for existing networks. Even if it were possible given the properties of any particular DApp (of low interaction frequency), it would surely completely congest the layer 1 network occupying a large part of the existing computational resources. In other words, existing layer 1 networks are not capable of supporting the type of DApps mentioned.

In order to carry out thousands of actions or simulations corresponding to thousands of users interacting with each other in each cycle, these heavy computations are outsourced. This is achieved by allowing the executing nodes of the external network to be configured to read from network 1 the simulation stages, or in other words, the rules of the algorithm to be executed. Then, and iteratively depending on a cyclic computational parameter, the executing nodes obtain the necessary information, carry out the simulations, and generate new corresponding states. Depending on the computational load required, the results of the computations are stored in raw form in the distributed memory of network 1, or, as will be seen below, the executing nodes combine, following rules stipulated in layer 1, these results in a cycle summary, resulting from carrying out a compression/encoding on the results of all the simulations corresponding to a day defined by the computation cycle.

In one embodiment of the invention, the outsourcing of computations to an external set of computers, called executing nodes, or simply executors, is implemented. This set does not necessarily form a layer 1 type network, or a DLT network. They are nodes that are configured to interact with network 1, to read data from it, to perform computations according to rules set in the program modules and layer 1 storage media, and to send the results of the computations on layer 1 networks. Sending this data to layer 1 may result in data being stored in the distributed registers, or in data being generated to be stored, or in updating the state of the virtual machine, or program, with which it is interacting, whose state is the one being stored.

If there is more than one executing node, a network is established called in the following layer 2 network, or network 2. The nodes of network 2 do not necessarily communicate with each other, as this is not necessarily required to carry out their computational function. The layer 2 network is formed by a collection of computers that make their computational resources available, sometimes, but not necessarily, in exchange for incentives; in other words, sometimes they rent their computational resources and charge for it. At other times, layer 2 computers operate altruistically, to help the system function, or are simply provided by companies interested in having their own DApps provide the desired functionality.

By not exhibiting the properties of high incorruptibility of layer 1 DLT networks, the processing carried out by these layer 2 networks has to be somehow controlled or monitored by the layer 1 network. At the same time, these networks have a large computational capacity, which must also be managed for the correct operation of the DApp. This has led to the development of certain program modules that optimize the interaction between both networks, allowing the use of network 1 by a DApp that requires a large computational load. Thus, in one aspect, the network 2 comprises one or more computers operating independently in client-server format. In another aspect, the network 2 comprises nodes of a proprietary network that receive no contribution for making their computational resources available. In yet another aspect, the network 2 is a DLT network, since the contributions of the various aspects of the invention can be applied to improve even the interaction between two DLT networks.

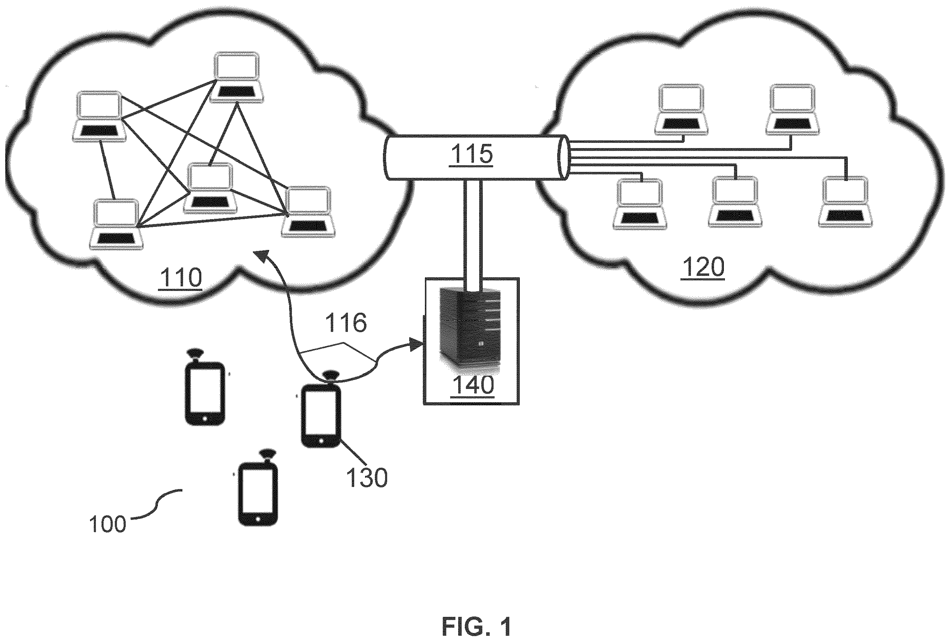

**FIG. 1** shows such a decentralized application system. The system 100 comprises at least two computer networks communicating via a communications network 115, for example, the internet. The first network 110 is a layer 1 type network, such as, for example, Ethereum. The second network 120 is a layer 2 type network, such as, for example, a set of executor computers. The nodes in the second network execute the bulk of the computations to carry out an application in a decentralized manner and store the result thereof in the first network. This configuration is mostly used to run applications that are very intensive in terms of computational power and/or the maintenance of a large amount of data to operate. In such a case, the computations are carried out in the layer 2 network, and at the end, the results, data, states, or compressed representations of the above, are stored in the layer 1 network. In other words, the bulk of the heavy computational resources are carried out and represented, or alternatively stored, in the immutable registers of the DLT network, minimizing the consumption of computational, processing and storage resources.

This invention is deployed in any layer 1 network that is a programmable distributed ledger system. As of today, Ethereum, TRON, EOS, or XDai, represent such a system, which, moreover, is based on blockchain technology, or simply blockchain. However, the teachings of the invention apply to any programmable DLT environment, that is, any distributed system of records that stores not only data, but also programmable code, enabling the deployment and execution of smart contracts (as a whole forming a DApp). Such programmable DLT environments comprise at least one virtual machine and at least one distributed record. The distributed records store, in part, the rules of the computations to be executed. Based on input data, the virtual machine acts on the information, either received or stored in the distributed records, in correspondence with the defined rules, to advance the state of the algorithm and generate output data, which may also be stored in the distributed registers.

This generic environment can be programmed by deploying particular software to run a required decentralized application, or DApp. In the context of this description, the term digital media also refers to modules or program code (other than a hardware implementation). Once the DApp program code is deployed on the network 110, for example, via a DApp manager 140, the portion of the DLT network executing the DApp may be represented as at least one DApp processor and at least one DApp memory. That is, the DApp processor, or processing means, represents the part of the DLT virtual machine that processes information for that particular DApp, and the DApp memory, or storage means, represents the part of the DLT network allocated to executing and storing data to perform the required DApp. In the remainder of the description, any reference to *"processor"* refers to the DApp processor, and any reference to *"memory"* refers to the DApp memory. Further, any reference to the distributed ledger network, first network, layer 1 network, network 1, Ethereum, EOS, BC, or blockchain, or simply *"DLT"*, refers to the programmable DLT network.

It is therefore considered that the scenario to be addressed is that of a DApp requiring heavy computations that may be segmented in some manner, whether in data packets or time slots, or otherwise. In a pre-computation operational phase, users, via their electronic devices 130, interact with the DApp asynchronously, advancing the state of the DApp correspondingly, which is stored in network memory 1. In another operational phase of computation, network executors 2 read the latest states of the DApp stored in network memory 1, in addition to other parameters, and execute the heavy computations.

A maximum computation set is defined as the set of computations that the program modules of the network 1 can reproduce efficiently and with a minimum consumption of computational resources, if necessary. The segmentation is carried out dynamically such that, at each computation cycle, a computation set equal to or less than the maximum computation set is determined, and a cyclic parameter is determined, allowing the executors of network 2 to carry out the scheduled computations. Thus, in case it becomes necessary, the computation performed by network 2 on a particular set can be reproduced by network 1 since this constraint is respected.

Therefore, the input data to the computation algorithm, as well as the computation algorithm itself, is configured to generate an output data, called the computation result CR. As will be seen below, this process allows to generate a plurality of hierarchical levels allowing a great scalability of the process. Depending on the determination carried out by the planner on the required computational load, it is possible to determine computation rules with a variable level of compression.

The computational operational phase is repeated cyclically, by computational cycles, as a function of a cyclic computational parameter. In one aspect, this parameter is the time parameter $t$ $(t1, t2, ..., tn)$. Regardless of the periodicity at which user decisions update the state of the DApp, at each time interval t, computations are performed by network 2 and the CR corresponding to that interval is stored in network 1. For ease of description, the time parameter t is used. Equivalently, a cycle can be defined in terms of a data packet of size p, after which the periodicity is repeated. Similarly, each of the multiple data packets $p$ $(p1, p2, ..., pn)$ can be the same in size or different. In the remainder of the description, the time parameter will be used, although the person skilled in the art may use any other cyclic computational parameter that allows segmentation of actions, for example, data packets, or others.

Users may be segmented by groups g, and all users in each group interact with each other by means of specific actions a that require to be simulated by heavy computations. The interaction between users via an action is carried out by at least one simulation. At this point it is considered that the DApp requires to perform a large number of computations based on the states updated by user decisions. Following the predefined rules of the DApp, a number of actions, or simulations, are carried out in each cycle. The set c, in an example, is determined as all actions in each cycle of each group. The size of the computation set is variable as long as it is equal to or less than the maximum computation set. Therefore, in each cycle of duration t (also defined as a computation cycle), the state of all actions of all users in all groups must be simulated. The duration time of each cycle is dynamically determined, depending on the amount of input data to be computed, in order to respect the constraint of the maximum computation set. In other words, the cyclic parameter is determined in each cycle according to the interactions received by the users during the last cycle.

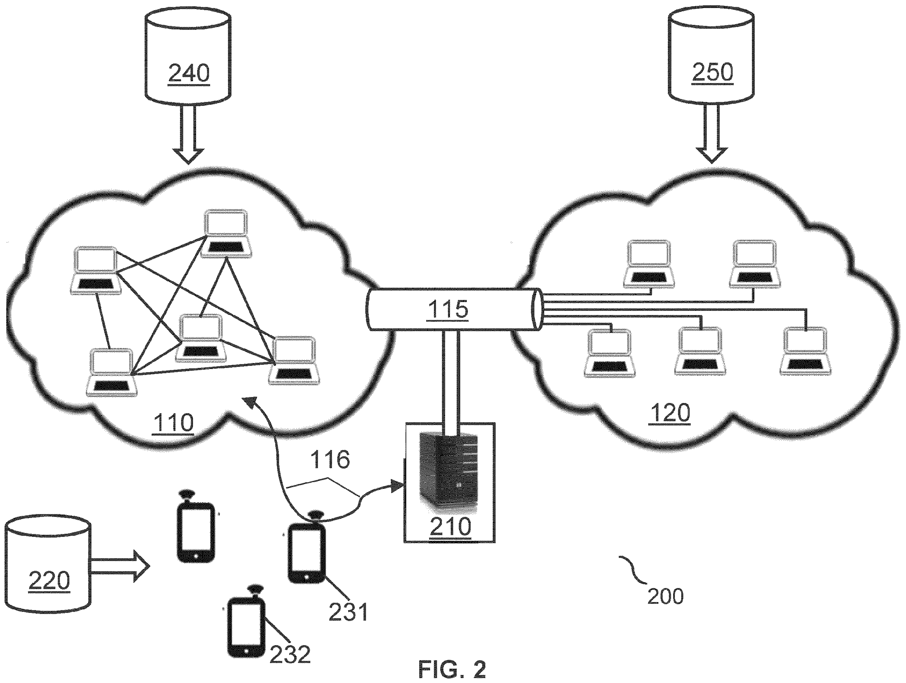

**FIG. 2** shows the deployment of the enhanced DLT system according to one embodiment of the invention. The system comprises at least one layer 1 type network 110, at least one layer 2 type network 120, and a controller 210. The controller module function is typically performed by the DApp manager. In an initial phase, the controller 210, or digital control means, are configured to deploy a first module 240 of programmed code to the network 1 and a second module 250 of programmed code to the network 2, to establish rules that determine each computation cycle (or simulation) to be carried out in each cycle, and at the end and start of new cycles.

In another aspect, and in order to facilitate this initial phase to the nodes of network 2, the second module is provided to them so that each node can download it, or can even develop its own second module, while executing the necessary actions, dictated according to the code of the first module (openly available for all users to reference it). In this aspect, no program 250 is deployed to the executing nodes in network 2, but each node develops its own program module to carry out the actions according to the rules stipulated by the DApp and openly available in the distributed registers of network 1. In another aspect, a hybrid situation is established where some nodes in layer 120 use the provided module 250, and others use code developed by other means.

The controller is also configured to, at any time, download application 220 to be installed on any electronic device (231, 232) of user. User electronic devices first communicate with the controller to download a DApp Interface (I-DAPP), and once installed, can communicate with the network 1 either directly or via the controller also acting as a gateway (direct and indirect communication is indicated by the two arrows 116). Once the deployment phase is completed, the controller performs certain functions of the operational phase. In another implementation, the I-DAPP is provided as a web interface in a browser, so that it does not require the installation process. In yet another implementation, electronic user devices may not need to download the application, but are configured to interact with network 1 and the other nodes in the system, since the code of network 1 is available for anyone to reference. The term controller, or digital controller, is used interchangeably to refer to digital means of control.

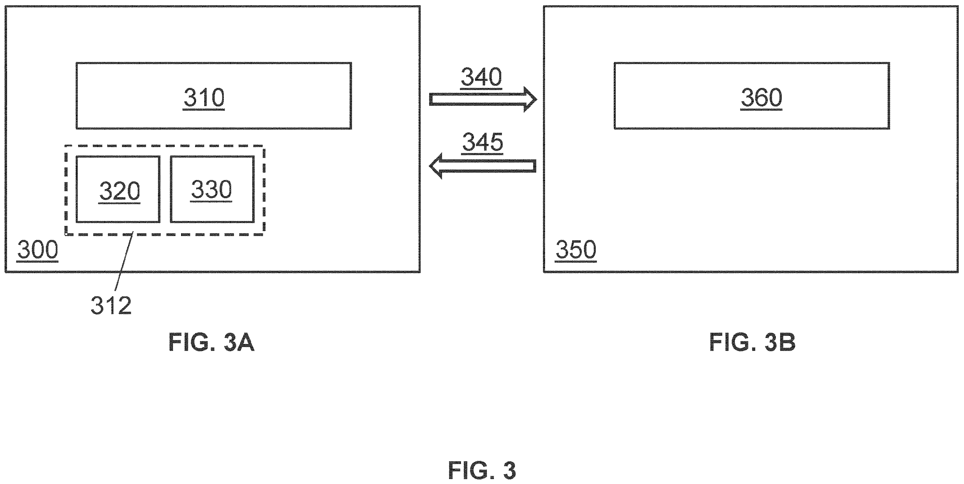

**FIG. 3** shows the program modules deployed in each network. **FIG. 3A** shows the first program code module 300 deployed in network 1, comprising at least one memory 310 and a processor 312. The processor, or processing means, comprises at least one scheduler 320 and at least one updater 330. The memory, or storage means, is configured to store at least the information generated from the interaction between the users, and the states of the various rules scheduled in network 1, that is relevant to the operation. **FIG. 3B** shows the second program code module 350 deployed in the network 2, comprising at least one executor 360, or digital means of execution. By means of the deployed program modules, the network 2 reads 340 the required data from the network 1, and once the relevant computation has been carried out, sends write requests 345 of computation result, to the network 1. The write action is performed by the receipt of the request by the updater 330, the optional execution of checks on the request (for example, that it is digitally signed by an authorized node, or that it is being received within the time interval set by the scheduler, or that no previous request has been received for the same time interval), and its subsequent storage in the memory 310.

As network 1 is a DLT network, any corresponding program code, media or modules exist in multiple copies, one copy per node, as each node runs a virtual machine within the DLT environment. Although, in one respect, network 2 is not a DLT network, in the same way, each node has installed program code that it receives or generates during the deployment phase. In this description, the program means or modules are referred to singularly (for example, *updater*), although the skilled person will understand that they are actually installed and deployed in multiple copies distributed across both network 1 and network 2 (that is, *updater* actually refers to *each updater installed at each node in network 1*). Unless the advantages of implementing the invention really on a single node has been explicitly highlighted in some aspect, the description in general assumes that communications are carried out in the distributed environment described.

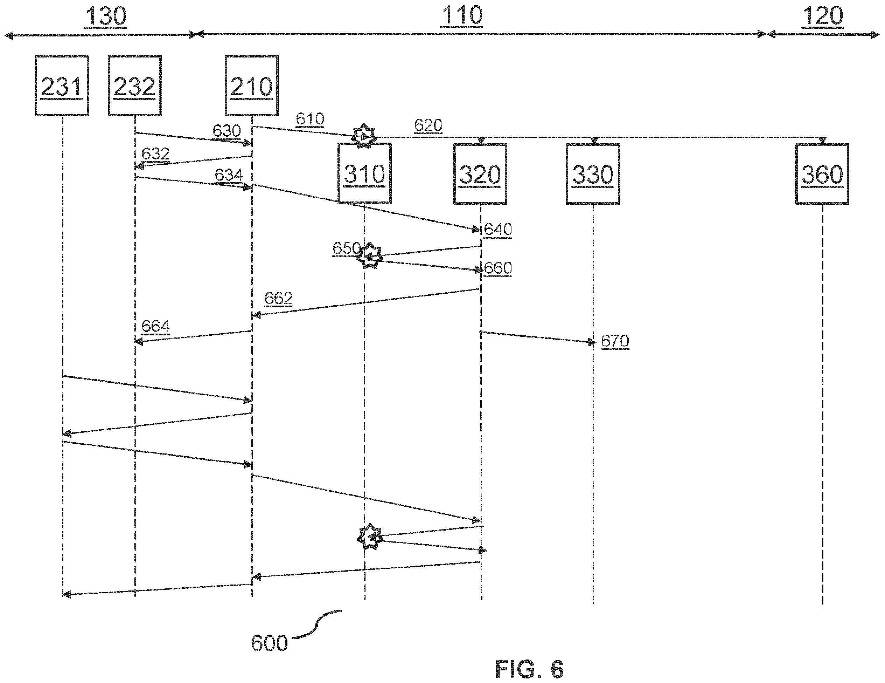

**FIG. 6** refers to an enhanced DLT system deployment procedure according to an embodiment of the invention. In a first stage, the controller 210 communicates 610 with the virtual machine of the first network 110 to deploy 620, on the one hand, the memory 310, the scheduler 320 and the updater 330 in the network 1. On the other hand, the controller communicates with the set of nodes of the second network 120 to deploy the executor 360 in the second network. As discussed, in another aspect, the second module is provided for each executor node to download, or develop its own second module.

Upon receipt 630 by a user node 132 of a request to install the DApp, the controller transmits 632 to the user the program code necessary to install the user interface on the user's electronic device. Once installed, the user node 232 communicates 634 to the controller with the user data. User electronic devices download a DApp Interface (I-DAPP); once installed, it can be used to communicate with the DApp on network 1 either directly or via the management media that also acts as a gateway (direct and indirect communication with the first network is indicated by the two arrows 116). In another implementation, the I-DAPP is provided as a web interface in a browser, so that it does not require the installation process. As discussed, in another aspect, the electronic user devices do not necessarily download any applications, as they may be configured to interact directly with the various modules of the system.

On the other hand, both in the first deployment phase and throughout the operational phase, new users are activated by registering data to corroborate their legitimacy when interacting with the system. Therefore, users' public keys are registered in the distributed registers of network 1 when authorizing them to use the DApp. This allows that, upon receiving any message or interaction from an activated user, the legitimacy of the user can be validated before proceeding with any further action. In one aspect, when deploying the DApp, the list of public keys allowed by the DApp manager that exercises the authority to add or remove authorizations is registered directly. In another aspect, when deploying the Dapp, conditions are established so that any user can add its public key by reading the rules stipulated and available in the network 1. In this case it is not essential to register through the controller, since this registration can occur both at the beginning and at any later time, without necessarily going through the controller.

Just as for DApp users, nodes wishing to interact with the DApp must register in advance. In one example, this is accomplished by a layer 2 executor node sending a request directly to the layer 1 DApp, and the layer 1 DApp proceeds with activation after making the regulated checks as to whether the requesting node conforms to the DApp rules. In yet another aspect, an executing node may be required to put down a deposit, which it would lose if it puts down data that is proven to be incorrect. The same activation or registration process applies to challenger nodes. In another aspect, it is the controller that adds the allowed executors to the DApp memory at layer 1, either as part of the initial deployed code, or through requirements at later stages.

The scheduler has the function of determining, based on the properties of the particular DApp, a maximum computation set that the first network can, efficiently and with a minimum consumption of computational resources, compute. From this maximum computation set and the interaction dynamics of the DApp in a particular computation cycle, the scheduler determines, for that cycle, the computation set c and the cyclic parameter, and stores them in the memory of network 1. Thus, the computation set c is equal to or smaller in size than the maximum computation set. The cyclic parameter of computation may be a parameter of time t or a parameter of size p, or other) comprising a value (either of time t or of size p, or other). This cyclic parameter is determined dynamically, depending on the amount of input data to be computed, to respect the constraint of the maximum computational set (the maximum set of simulation rules computable by the first network). In other words, the cyclic parameter is determined at each cycle according to the interactions received by the users during the last cycle.

In case it is the scheduler 320 that receives 640 an activation request, the scheduler 320 determines the cyclic information, assigns the user to the corresponding group g, and updates 650 the memory 310 with the new user data, and the cyclic information update (inter alia, the cyclic parameter and the computation set). The memory update comprises storing the data in the distributed registers of the network 1. In this way the user can confirm its activation, by direct reading of its public key in the DApp memory, or by communication 662 with the controller, which performs the reading. In this way the cyclic computation parameters are available for reading 670 by any node, for example, by the updater 330, which uses them to manage the cyclic computations.

The user activation steps are repeated each time a user joins the DApp (the following unnumbered arrows refer to this possibility). In another aspect, they also refer to the same communications protocol when a user wishes to unsubscribe from the DApp. In one aspect, the memory is updated with all the registrations and de-registrations generated in a time interval, for example, of a cycle t, to reduce interactions with network 1. In another, the de-registration process requires the verification of a number of conditions; for example, that a minimum time has passed since activation, that one is not participating in a *"challenge"* at that time, and so on.

The interactions with network 1 that consume significant computational resources have been identified by a star. In this aspect, they are the stage 610 of deploying program code modules to network 1 and the stages 650 of activating new users. As mentioned, only one stage 650 needs to be performed for multiple users per cycle. Therefore, a deployment procedure is implemented with few costly interactions in terms of computational resources with network 1.

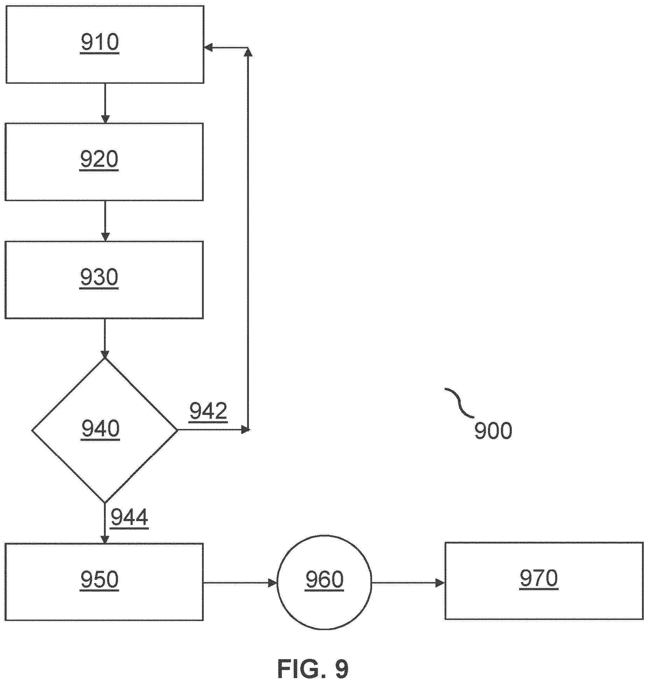

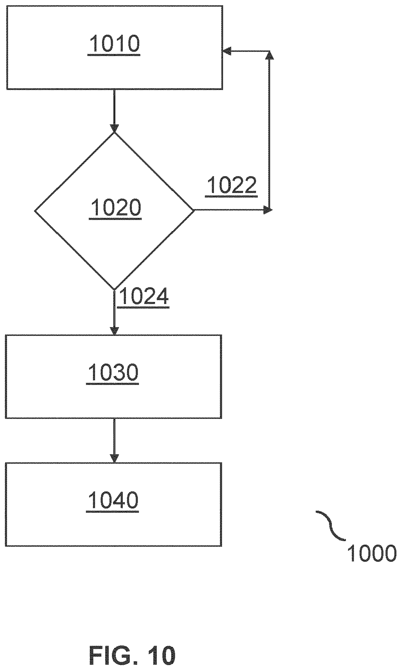

Once the initial deployment and configuration phase of networks 1 and 2 is over, the DApp operational phase begins. It is understood that even in the operational phase it is possible to continue activating or deactivating users. **FIG. 9** refers to the stages 900 of the operational procedure of the enhanced DLT system carried out by the modules of network 1 in each computing cycle, while **FIG. 10** refers to the stages 1000 of the operational procedure of the enhanced DLT system carried out by the set of executing nodes of network 2 in each computing cycle. The method is cyclic, whereby it is repeated at the end of the interval t, unless a repetition is carried out earlier. At this point the scheduler has already determined the cyclic computation parameter that will define the duration or length of a computation cycle, as well as the computation set c. At the end of one time slot, another similar time slot t is opened. Each of the multiple time intervals $t$ ($t1, t2, ..., tn$) and computation sets c ($c1, c2, ..., cC$) may be the same in length (size or dimension) or different as determined dynamically by the scheduler based on the last user interactions with the DApp during the last cycle(s).

Returning to FIG. 9, at the beginning of a new computation cycle, at stage 910, data related to the decisions carried out by the users are continuously received. It is checked 920 whether these follow the stipulated rules, and if so, DApp rules are applied 930 based on the decisions, advancing the state thereof. At stage 940, it is checked whether the cyclic computational parameter has been met, for example, whether time t has run out. In case negative 942, the stages of receiving decision data, checking for adequacy, and updating the DApp state are repeated. In case positive 944, that is, the end of an iterative cycle has been reached, at stage 950, the last states of the DApp (the current global state), are stored in the memory of the network 1. After a short timeout interval 960, at stage 970, the computation result carried out by at least one executing node of the network 2 is received and, after checking the legitimacy of the source, is stored in the memory of the network 1. In one aspect, a seed is also generated from the latest states of the DApp and is also stored in the memory of the network 1. The seed acts as a randomness generator, to be used in the computations of the executors, as it is computed from applying a highly discontinuous function (such as a hash) to an input summarizing the state of part, or all, of the network 1 just at that instant. In this aspect, it is ensured that the results of the computations to be carried out by the executors could not have been predicted prior to the generation of the seed.

Referring back to FIG. 10, the executing nodes of network 2 continuously check 1010 for updates in the memory of network 1 that are relevant to their operation. By means of this check, they obtain the cyclic computation parameter. At stage 1020, each executor checks whether the cyclic computation parameter has been met, for example, whether the time t has expired. In case negative 1022, it continues to carry out the periodic checks. In case positive 1024, that is, the end of an iterative cycle has been reached, at stage 1030, the executor obtains, on the one hand, from the memory of network 1, the seed together with the last states of the DApp, and on the other hand, the data related to the decisions taken since the last cycle. From these data, and the stipulated rules of the DApp, downloaded earlier, at stage 1040 each executor performs at least one computation, generates the computation result CR, and sends a write request of the CR for storage in the network memory 1.

The scheduler, or digital scheduling means, is configured to determine, according to the properties of the DApp in question, the parameter t (or any other equivalent parameter). In this way, the frequency with which data is updated in the network 1 is determined. The scheduler, or digital planning means, is configured to determine, according to the properties of the DApp in question, the computation set c. In this way, the rules of simulations to be carried out by the executors of the network 2 are determined. Such computation information comprises, among others, the set of simulations to be carried out (the computation set c), what level of information compression is required to be received in the CR, the mode of selection of executor nodes that will carry out the computations, the parameters defining the frequency of computations and the instant at which the results are expected to be received, the last states, and optionally the seed. The information comprising the last states is stored as is or compressed by applying a compression function (known to the skilled person as its hash or Merkle root). In one aspect, a random number, known as a seed, is also stored from the state of the DApp, or layer 1 network, immediately preceding; for example, if the layer 1 network is blockchain, this seed may be generated from the blockhash found in the header of the last mined block. Therefore, the seed is intrinsically linked to the global state of the DApp or layer 1 network at that time instant $tn$. In this aspect, both data, on the one hand, the hash of the states, and on the other hand, the seed, become indispensable for an executing node to carry out the required computation. In other words, the code of the computations algorithm requires both, as a measure of verification of the security of the system. On the other hand, depending on the application, such a high level of security is not necessary, and computations can be carried out without such a seed.

An instant of time is defined, typically at the end of each cycle of duration t, at which the result of the computations is expected to be received. Correspondingly, the executors of network 2 obtain this scheduling information necessary to trigger the execution of the corresponding computations by network 2 based on this parameter. Upon completion of the computations corresponding to a cycle, the executors send the results, or compressed representations of them, to the network 1 updater for storage in the immutable distributed registers. In one example implementation, the time instant is defined by a time of day, for example, at midnight each day (defining a 24-hour computation cycle). In another example implementation, the time instant is defined to be every 15 minutes starting from an instant, for example, midnight (defining a 15-minute computation cycle). The scheduler is configured to analyze the characteristics of each DApp and determine, on the one hand, the cyclic computation parameter $t$, and on the other hand, the computation set c, to meet the maximum computation set constraint. Additionally, this determination can be made based on the computational capabilities of the executing set of network 2, or the required update frequency of the distributed registers of network 1.

The updater, or digital update means, comprises program code configured to, based on the cyclic information available in the memory of the network 1 as determined by the scheduler, receive, at the end of each computation cycle, at least one CR computation result. Before accepting a result, the updater identifies and validates the legitimacy of the executing nodes that automatically issue the results at the end of the cycle in question. In addition, it verifies that the reception occurs in the correct interval and does not refer to a different interval. In one aspect, the updater performs the update of the result received from the executing node that provided the result of the computation earlier (that is, the first or fastest). In another aspect, the updater is configured to receive multiple results from multiple different nodes and store the average of these results. In yet another aspect, the updater is configured to cyclically select the executing node from which to receive the result of the computations.

Whereby the scheduler writes cyclic information into memory (among others, the cyclic parameter and computation set) allowing the reading of this information for the executing nodes of network 2 to execute program code. Network 2 comprises at least one executor node, defined as the execution set. Computers join the set incentivized to do so voluntarily. Therefore, they do not necessarily belong to the same entity, person or company. That is why they are configured to, in an initial phase, read the simulation rules and generate program code configured to carry out a series of calculations as dictated by the rules.

In an operational phase, the program code of the executing nodes is configured to periodically check for new data or updates. This can be implemented by constantly updating their local memory of all available data, both in the memory of network 1, as well as those received, for example, from the controller. As will be seen, some of the information needed by the executors to carry out their simulation computation function is obtained from the memory of network 1, but in some respects, on the other hand, that which consumes more memory and bandwidth when transmitting them, is obtained from outside network 1, preferably from the controller (DApp manager). This information (decision-related data) comprises either raw data or versions compressed by the controller. The controller publishes all the data to a public repository, for example, to an internet site, or to an interplanetary file system IPFS, or disseminates them via a node whose function is to disseminate data to all participating nodes of the system of the invention (for example, executing nodes or challenger nodes).

In one aspect, a new computation cycle starts by detecting, by the at least one executing node, instructions stored by the scheduler. These instructions comprise a cyclic parameter, for example, a specific time, at which the updater expects to receive at least one computation result by at least one executing node at the latest. Based on this cyclic parameter, each executing node fetches the latest data stored in the distributed registers of the network 1. These data comprise, among others, the states of the DApp and the computation set. They then run one or more simulations based on the computation set c (which are the preset rules in the first network) using the obtained data as input data. Network 2 performs this computation stage off-line. Therefore, and advantageously, no update and storage of the distributed records of network 1 is carried out as such each time each user interacts with its I-DAPP, making various decisions and sending them to network 1.

The simulations generate output data typically comprising new states of the DApp. As mentioned, the input data to the computation algorithm, as well as the computation algorithm itself, are configured to generate an output data (computation result). As this configuration respects the maximum computation set constraint, the computation result generated by the executing nodes of network 2 is reproducible by the program modules of network 1, if necessary. Therefore, the computation result comprises at least one result set reproducible by the first network.

In principle, the raw result 1110 of the heavy computations could be stored in the distributed records of the network 1. In contrast, for a highly scaled application, with a high degree of user interaction, and computations to be performed, the computation result occupies an excessive amount of memory and consumes too many computational resources for the DApp to be feasible. Therefore, in another aspect, at the end of each computation cycle, the updater generates a cycle summary, comprising at least an encryption of the results of the actions, or simulations, or part thereof. In one aspect, the cycle summary is the result of applying an encryption to the concatenation of all computation results at the end of each cycle. In this way, instead of interacting with network 1 very frequently, using its resources more and generating congestion, the number of interactions is minimized by the cycle summary of the actions of the group corresponding to a cycle. Consequently, using as a compression base the set of results computable by the first network, it is possible to scale the number of users, interactions or computations, generating cycle summaries of combinations of CRs, or generating cycle summaries at different hierarchical levels, whose result can be computable by the DLT network.

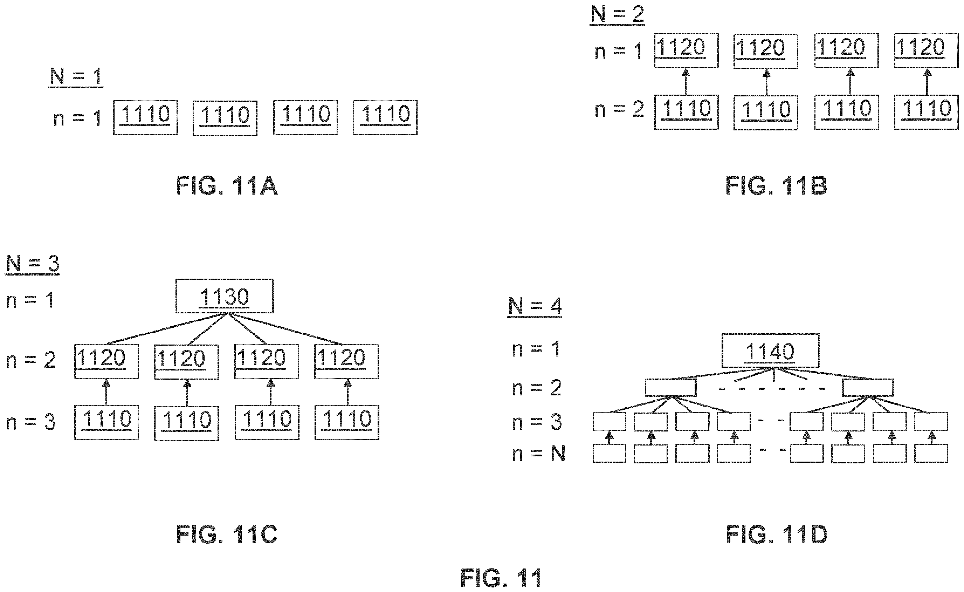

**FIG. 11** shows examples of various implementations of the computation result as determined by the planner to optimize system operation. In one aspect **(FIG. 11A)**, the computation result comprises a set of raw data 1110. In this aspect, the result represents a single level (N=1) of data. In another aspect **(FIG. 11B)**, the computing result comprises a set of encrypted data 1120, each being an encryption of the raw data 1110 of the lower level (n=2). In this aspect, the result represents two levels (N=2) of data. In yet another aspect **(FIG. 11C)**, a computation result 1130 is generated from a plurality of encryption sets 1120 of the lower (n=2) level. In this aspect, the result represents three levels (N=3) of data. In even further aspects **(FIG. 11D)**, this pattern is continued to generate a computation result (level n=1), from a plurality of encryption sets of the immediately lower level n+1 (n=2), the result of which represents N levels of data. The lowest level of the hierarchical tree (n=N) comprises the raw results 1110, and the highest level of the hierarchical tree (n=1) comprises the computation result to be stored in the distributed memory of the network 1. The example of FIG. 11D deals with a four-level tree (N=4). In an example implementation, a level other than the top level (n=1) may be dimensioned to comprise approximately one thousand CRs.

In one aspect, a cycle digest (encrypted CR) is generated by applying a hash function H, for example, SHA-3 (*Secure Hash Algorithm*), according to the following expression:

$$\text{encrypt(results set)} = H(\text{concat(results)}) \Rightarrow \text{cycle summary} \qquad \text{[expression 1]}$$

wherein the results set is determinable by the scheduler to encompass different sets of actions (depending on the preferred partitioning of the users and the properties of each DApp) as appropriate, the function number H is a Hash function, concat() is the function that concatenates its inputs, and the cycle digest is the output of the H function, representing a signature of the computed content. As will be seen later, if one of the nodes in network 2 acted irregularly and wanted to cheat the system in some way, for example, by modifying the results set, its encryption would not correspond to the verification carried out by any other node, giving it away.

Thus, as an example, for all groups *g1, g2, ..., gN,* a number R of cycle summaries (*n1, n2, ..., nR*) is generated, each of which can be simply an output of the encryption function, corresponding to the unique signature of the result set of a group g. The executor requests the updater to store the set of R cycle summaries in question in network memory 1. The result data and the state of the virtual machines on each of the layer 1 nodes are also updated.

To generate a cycle summary that can be transmitted and updated in network 1 in a more optimized way, in another aspect, the results of each computation cycle t are used to generate a Merkle tree and transmit as a cycle summary, for storage, the Merkle root of the constructed tree. This algorithm speeds up the process of generating the inclusion test allowing for more efficient verification. The Merkle root is determined from the following expression:

$$\text{Merkle encryption(results set)} \Rightarrow \text{cycle summary number} \qquad [\text{expression 2}].$$

In another aspect, the cycle summary is the result of applying an encryption to all the results of a day T which may be defined as a defined plurality of t computation cycles. In this aspect, since only one Merkle root representing the result of a day T is stored, it interacts less with the network 1 providing significantly less data to be stored in memory, with its associated benefits in terms of lower resource consumption and congestion reduction.

In yet another aspect, the cycle summary is the result of applying an encryption to all the results of all the G groups of participating nodes of a day T. The encryption could be based on, for example, the concatenation of all Merkle roots computed for each day T. Alternatively, the Merkle encryption is applied to all raw results of all groups, rather than to the set of Merkle roots of their subgroups. In both respects, we interact with network 1 by contributing even less data to be stored in memory.

These different modalities of cycle summary generation define different levels of compression, in which the final number represents more or less encrypted information. Moreover, regardless of their hierarchical level of compression, all cycle summaries have, at their lowest level of the hierarchical structure of compression, the set of results reproducible by the first network.

As will be seen in more detail below, a verification phase is also implemented, allowing any challenger node (for example, from a set of challenger nodes), to verify the validity of the calculations made by means of the cycle result stored in the memory of network 1, and if necessary, to prove its invalidity. Therefore, the compression level selected by the scheduler (which defines how much information is condensed in a particular cycle summary) not only allows optimizing the consumption of computational resources in the operational phase but also in the security phase. This is because it allows a very efficient verification stage, since it is based, in the first instance, on the verification of correspondence between two numbers, that is, whether the global cycle summary (of first level n=1) stored corresponds to that received by the challenger node. If so, the consumption of computational resources is minimized for all data completely at once. As will be seen in more detail, this process is allowed since the program modules of network 1 are configured to reproduce a computation set c that is equal to or less than the maximum computation set.

In yet another aspect, the same protocol can be re-utilized to obtain even more savings in computational and memory resources, increasingly decongesting network 1. The scheduler is configured to determine whether there are other DApps that are similar in terms of update rate or frequency, based on the parameters t, or p, or any other parameter used. If so, the scheduler synchronizes the updaters of the various DApps to pool as much as possible the result sets of various DApps, and update network 1 the minimum number of times.

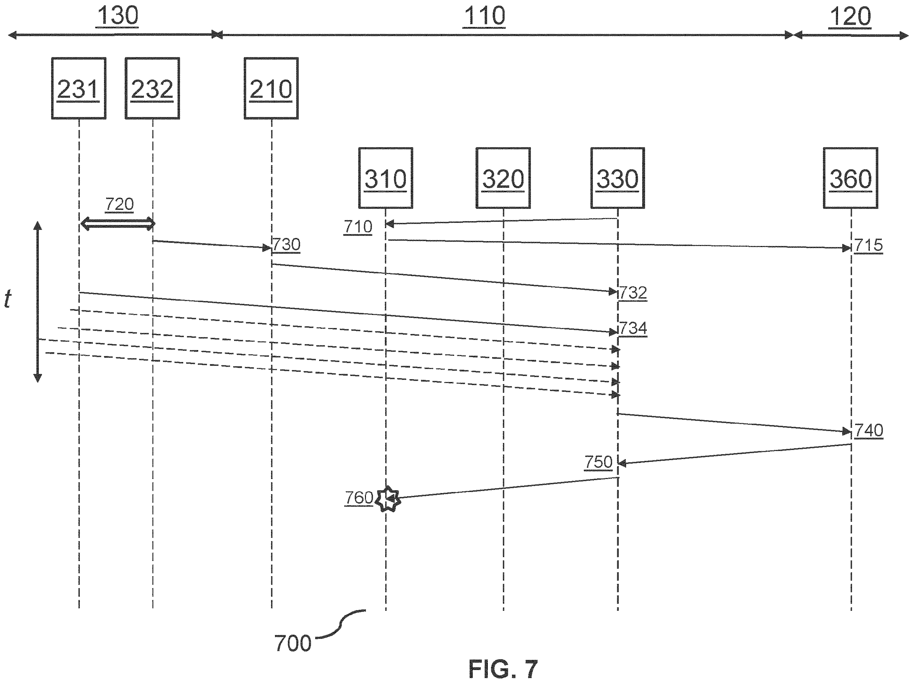

**FIG. 7** refers to an operating method of the enhanced DLT system. Based on the computation parameters received in advance from the scheduler 320, the updater 330 starts a new computation cycle, or iteration of duration t, and obtains the cyclic parameter at which it expects to receive the results of the computations from the executing nodes. In one aspect, the cyclic parameter is a time parameter, such as a specific time during a 24-hour period.

Prior to, or during this cycle, users make a series of decisions 720 each on their own while interacting with the DApp. In one aspect, the users transmit data related to the decisions to the network updater 1. In another aspect, the users transmit this data to the controller, which aggregates a set of the data before interacting with the network 1. Thus, in one aspect, a first user 232 transmits 730 the data first to the controller which relays it 732 to the updater. In another aspect, a second user 231 transmits 734 its data directly to the updater. The other interrupted arrows represent all other decision result communications received from the other electronic devices interacting with the DApp.

In a preferred aspect, which consumes less computational resources, the controller queues decision-related data for a time interval, and sends a storage request to the network updater 1 that encompasses a compressed representation of all the data corresponding to that interval. On the other hand, the raw data and its compressed version are available to any other node participating in the process. On the one hand, any executing node can access them to carry out the computation of simulations, and on the other hand, any challenging node can access them to carry out a verification of the computation of a simulation before deciding whether to issue a challenge or not. The controller verifies the signatures of the sending sources. The sending to network 1 of the queued data is performed in a single transaction, since the sending consists of a compressed version of all decisions in the queue, in order to save storage space in network 1. In one aspect, the controller is the only one authorized to perform this hold and send process, for example, by checking its signature by the DApp code; in particular, this avoids having to verify the signatures of each decision in network 1.

Thus, interaction with the network 1 may be performed by users either directly or through the controller 140 (shown in FIG. 1 by the two arrows). During each interval t, all users, or the party actively using it, perform a series of decisions related to the DApp. In an example case, users make decisions when interacting with an application on their electronic devices. The data related to these decisions is eventually sent to network 1, either in raw or compressed version. Network 1 is configured, via the corresponding program module, to update a state of multiple states of the DApp. Whereby multiple users asynchronously send multiple interaction data, which is automatically processed by network 1. The result of this processing is the update in the memory of network 1 of the state of the DApp, or virtual machine. Data submissions from users are always signed with their key, which allows the recipient to validate the source of the data.

In summary, in one aspect, users directly send data related to their decisions to the DApp, which stores them in raw format. In another aspect, this data is first sent to the controller, which encrypts it, for example, using a particular hash function (compressed version), and then stores it in the distributed recordsof the network 1. In another aspect, the controller aggregates a plurality of data from multiple users to compress them, for example, by means of a particular hash function (compressed version), and then stores them in the distributed registers of the network 1. To obtain the greatest benefit in terms of reduction of computational resources, a plurality of data corresponding to multiple users is stored by means of a particular hash function (compressed version).

Upon receiving this data, the layer 1 program module is configured to validate the source of the data, and that it has been signed by the legitimate user (either a previously activated user, or the controller). The data is then checked to ensure that it corresponds to decisions allowed by the DApp and that it falls within the range of allowable decisions. If so, the stipulated step is carried out using the set of decisions as input data to advance the corresponding state to the next valid state. At the same time, possibly, output data corresponding to the new state is generated. For example, in this aspect, the controller makes the raw data accessible to the executors or challengers, who can ensure its integrity by comparing the result of applying the particular hash to the received data with the hash stored in network 1.

At the end of each computation cycle of duration t, each executor involved in carrying out the computations reads, or otherwise obtains, the latest data stored in the network 1, and executes 740 the corresponding computations. These computations comprise carrying out the actions preset by the DApp (computation set c) regarding the interaction between users based on their decisions. At the end of each computation cycle, the executing nodes generate the CR computation result (at least one set of raw results, or a cycle summary of all results of all computations done in a cycle), and return 750 this CR computation result (which is a single number) to the updater, which stores it 760 in the distributed registers of the network 1.

Thus, after computing an enormous amount of simulations, in the end, network 1 is updated by a single interaction (or transaction), represented by the star 760. This operational phase is the one that generates the immense amount of data that does not make it feasible by existing implementations. On the other hand, as can be seen by the single star of phase 760, for each computation cycle, network 1 is interacted with only once, allowing a minimum consumption of computational resources.

At this point a complete processing cycle has been completed, from reading input data and states, computing the actions according to the preset rules, and updating the DLT network with the output results and the latest states, by storing the computation result. This cycle corresponds to all the actions performed by users interacting with each other during a computation cycle. All this has been carried out through the transmission by a node of network 2, and the updating of the distributed registers of network 1, of a few numbers (or less, up to a single number) representative of all the results, without any node of network 1 having carried out the processing of a single action or simulation. Thus, the enhanced DLT system allows the execution of DApps that require frequent interaction between multiple users sustained over time in an efficient and optimal way.

In addition, the present DLT system architecture proposes to solve an existing problem in the aforementioned systems that are composed of two DLT networks, a primary and a secondary one. This type of strategies suffer from an additional problem, which is that the security of the layer 2 (secondary) DLT network is guaranteed by the way it is connected to the layer 1 (primary) DLT network, by means of smart contracts at layer 1. This connection brings a multitude of problems to the architecture, among them: i) it requires all layer 2 users to monitor individually, and continuously without interruption, that layer 2 nodes behave honestly, ii) it forces not to consider any layer 2 state as 'finished' or 'secure' until the passage of at least one week since the last action of a user, iii) it requires layer 2 nodes, and even users, to store an amount of data that grows enormously with the passage of time.

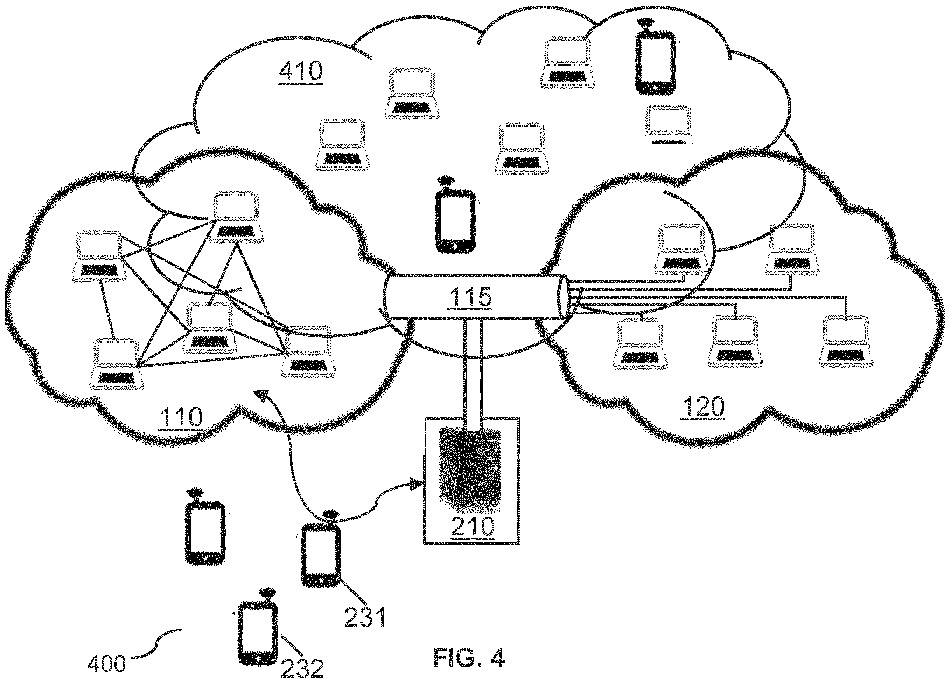

The system design also makes it possible to implement system security against malicious attacks efficiently and optimally. **FIG. 4** shows the secure DLT system according to another embodiment of the invention. When the network 1 is updated by storing a computation result, a security time interval begins during which any node can challenge the computation result stored in the memory of the network 1. As will be seen below, the security protocol is designed to complete in a maximum predetermined time, despite encompassing the verification of a huge amount of data related to the utilization of the DApp by users. Each time network memory 1 is updated with a new CR computation result, a predefined security interval s ($s1, s2, ..., sS$) is triggered. The security protocol is based on the assumption that, if at the end of a particular security interval s, no challenge has been received, the data provided by the executor are considered valid, ending the verification process triggered by the update of the memory of network 1. In the simplest case, the verification process is completed after a single safety interval. In more complex cases, the verification process is completed in two or three safety intervals.

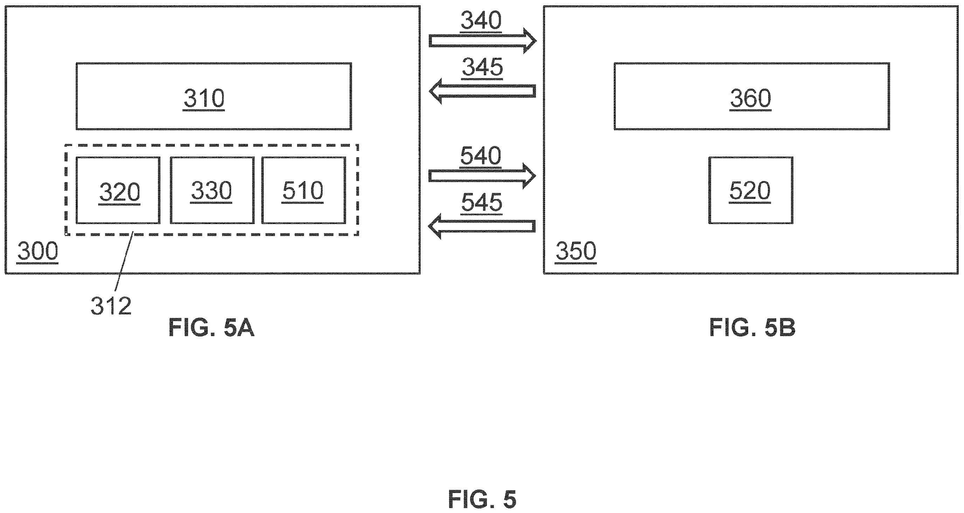

**FIG. 5** shows the program modules deployed in each network according to this embodiment of the invention. **FIG. 5A** builds upon the embodiment of FIG. 3A, additionally showing program code deployed in the network 1 corresponding to a digital verifier 510, or digital verification means. The digital verifier, deployed in a distributed fashion in the network 1, is dimensioned to perform at least a maximum set of computations. Accordingly, the verifier is configured to perform the computation set c based on a set of raw (uncompressed) data. In an aspect of the invention, **FIG. 5B** is based upon the embodiment of FIG. 3B, additionally showing program code deployed in the network 2 corresponding to a challenger node 520, or digital challenge means.

A challenger node is configured to issue 545 a challenge comprising data to identify the computation result CR (of level n) of the computation to be verified along with the data upon which that computation (of level n+1) was based. This data is the data from the next lower level in the compression hierarchy (of level n+1), comprising another CR, either another cycle summary (1120; 1130) from a lower level, or the raw data (1110) from the lowest level. This contributed data may be read 540 by any challenger node, or by any node so configured.

The verifier module 510 is configured to trigger a first safety interval when a computation result is stored in the distributed memory of the network 1. If at the end of this time interval, no challenge has been received, this computation result is considered valid, and the verification process for this computation cycle is considered completed. The verifier module 510 is configured to, in case a first challenge is received, repeat the cycle, triggering another security interval, in which case either another challenge is received, or the data (the re-computation of the computation result) provided with the challenge is considered valid.

The challenger nodes form a challenger set 410. The challenger node may be any node. Indeed, in one aspect, the challenger is a node that does not belong to either network 1 or network 2, but voluntarily participates given the incentives offered to perform this function. This advantage is due to the fact that the computation result is updated (or stored) in network 1, allowing anyone to read it, contrast it, verify it or challenge it. This property strengthens the security and transparency of the DLT system. In another aspect, the challenger corresponds to a user who is using the DApp. In another aspect, the challenger may be a node in network 1 or network 2. In FIG. 5B, the challenger is one of the executing nodes.

Since the verifier of network 1 is able to compute any computation result efficiently, the challenger specifies the index $n$ ($n1, n2, ..., nN$) in the challenge request that identifies the computation result (either the result set or the cycle summary) under suspicion. In case the security interval ends without receiving further challenges, the checker is configured to determine whether the challenge refers to a computation result of the lowest level (n=N). Network 1 computes the true value based on the same input values and stored state corresponding to the specified index $n$, and if they diverge, network 1 is updated with the correct value, thereby correcting the irregularity and reversing the malicious attack. This action is carried out in a first verification interval. That is, in the verification process, the verifier of network 1 is configured to replay a simulation previously done by an executing node and verify whether its result matches with the stored one or not. In case of divergence, while storing the correct result, the malicious executing node that carried out the attack is identified. If all the computation results were corrupted, it is enough to specify one by the challenger to be able to carry out the attack identification.

In another aspect, the challenger specifies not only the index $n$ of the suspicious set corresponding to a group g, but also all other indexes R-1 corresponding to all groups processed by the same performing node of network 2. Thus, if network 1 determines that there was an irregularity for set n, and the performing node is declared as malicious, all the results corresponding to that cycle for all other R-1 groups are computed and replaced at the same time, since the system can no longer rely on the computations performed by that node.

As described for the generation of the CR, the CR can be a raw result set, or a direct encoding based on a hash function (which represents a low concentration of information), or an encoding based on the root of a Merkle tree (which represents a higher concentration of information), or a chain of Merkle trees (which represents an even higher concentration of information), or a combination thereof. The inventors have realized that the verifier is limited to verify, in an efficient and scalable manner, only those result summaries with a low degree of concentration. If the summary to be verified is of high level and high concentration, the verifier cannot perform in a reasonable time the re-computation of all the concentrated simulations.

To provide a scalable security procedure that can run at the same speed and based on the same immense number of user actions as the operating procedure for simulations, a staged procedure has been developed in which the low-level summary identification step is outsourced to the challenger nodes, and the verifier performs only the last step of verifying a particular low-level concentration computation.

This process differs from the previous one in that it allows that, during the verification interval that begins each time data is updated in the memory of network 1, any challenger node to challenge the challenge of the previous challenger node, allowing a series of challenges to challenges. This iterative phase aims to reduce the hierarchical level of the summary to be re-computed to the lowest one, so that it can be re-computed by the verifier. In order to issue a challenge, the identification of a summary of lower level than the previous challenge must be provided. In this way each subsequent challenge gets closer and closer to the point of the summary to be re-computed, providing an efficient search for the lowest level summary. That is, starting with the highest hierarchical layer, and iteratively, a stepwise verification is performed to isolate the final summary to be re-computed. This stepwise verification procedure allows the high scalability necessary to make viable the execution of the decentralized applications object of the invention.

The verification process can be carried out in a bounded number of iterations, completing the verification of all the data generated by the DApp in a short period of time, called the finality period. This is because, in each iteration, there are fewer and fewer sets to challenge allowing each subsequent challenger node to take less time to issue a challenge. The process is finalized in a maximum of N iterations. Since a challenge period of less than one minute can be defined, the verification process can take, in the worst case, a few minutes. This maximum verification time, in an example, does not exceed one minute. Therefore, the network architecture allows for a fast challenge and verification process, that is, detection and correction of irregularities, even in systems with high DLT usage and high traffic frequency.

Returning to the compression scheme of the results of the computations carried out by the executing nodes, there were different options available to the scheduler and/or the updater to dimension the operational phase, depending on the number of computations to be carried out and the number of participating executing nodes. In the simplest case, so few computations are performed that a $CR_B$ computation result is generated based on the last states generated from the multiple computations (low-level compression). In another aspect, it is necessary to provide more compression by generating an $CR_M$ based on a Merkle root (medium level compression). In yet another aspect, an $CR_A$ is generated as a function of a Merkle root of Merkle roots (high level compression). For the lowest level, the verification process ends after a safety interval. For the medium level, the verification process ends after two safety intervals. For the highest level, the verification process ends after three safety intervals. Therefore, the duration of the verification process varies depending on the required compression level of the executing nodes. The scheduler is configured to vary the number of compression levels, or degree of compression per computation. Consequently, the verification process will be configured to perform the number of iterations accordingly. The purpose of the verification process is based on two principles. Firstly, it is allowed that during a particular security interval, any challenger can issue a challenge as to the validity of the input data. Secondly, as mentioned above, it is assumed that the data provided by a challenger is valid if at the end of the security interval this data has not been challenged by another challenger.

A basic requirement for issuing a challenge is the provision not only of the data allowing to identify the challenged CR, but also the data allowing to re-compute again the challenged CR. The idea is that, if necessary, eventually, network 1, by means of a verifier module, re-computes, at a lower level, a simulation carried out by an executor previously in order to check whether its computation does not match the executor's previous one (proving the challenger right), or whether its computation matches the executor's previous one (proving the challenger wrong). Thus, there is a set of computations that can be performed by the verifier that does not pose any load or congestion problem for network 1. But this computation is performed by the verifier only in the case where the data provided by the challenger comprises raw data corresponding to the set, which is the case only for a CR generated with a lower compression level.

As an example, for a summary generated with a medium compression level, the storage of $CR_{M\_O}$ (the original medium level CR) in the memory of network 1 by an executing node triggers a first safety interval s1. During s1, $CR_{M\_O}$ has been challenged by a first challenger R1 providing $CR_{M\_O}$ and $CR_{L\_N1}$, where $CR_{L\_N1}$ (the low level CR) is the cycle summary of the lower level that allows to validate a $CR_{L\_N1}$ (the new middle level CR) as the correct one.

In one case, the safety interval ends without further action. Then the $CR_{L\_N1}$ provided by the first challenger R1 is considered valid, and is stored as the correct one, effectively replacing the data previously stored in the memory of network 1, and the verification process ends. In this case, the verifier has not had to carry out any re-computation, and only one storage action has been carried out in the memory of network 1.

In another embodiment, during the first safety interval s1 to challenge $CRm\_o$, $CR_{L\_N1}$ was contributed. This in turn triggers a second safety interval s2, in which a challenge to $CR_{L\_N1}$ is received by a second challenger R2, which in turn contributes $CR_{L\_N1}$ and the raw state data, which allows $CR_{L\_N1}$ to be re-computed. In this case, network verifier 1 determines that the challenge is to a lower level (or base) CR, and using the raw data provided, re-computes the CR to determine a new low-level computation result $CR_{L\_N2}$. The value of the challenged CR $CR_{L\_N1}$ is then compared with the value of the recomputed CR $CR_{L\_N2}$. If they are equal, the value $CR_{L\_N1}$ is kept stored. On the other hand, if they diverge, the new value $CR_{L\_N2}$ is stored, effectively replacing the previous one. We also proceed accordingly to penalize the erroneous executing and challenging nodes, and to reward the honest executing or challenging nodes. In this case, the verification process is terminated in a maximum of two safety intervals. Following the same logic, even if, instead of two levels (medium and low), there were more compression levels, the verification process would still be terminated in a few security intervals, resulting in a security protocol that allows a very high scalability of interactions by users executing a DApp in an optimized way while guaranteeing security.

One of the properties of the first DLT network is that the preestablished rules of the virtual machine are transparent to all actors and users, comprising the complete verification and challenge process, and the corresponding incentives and penalties. Thus, on the one hand, the penalty is executed to the owner of the executing node or malicious challenger, and on the other hand, any other node is discouraged from attempting the same malicious action. The penalty may comprise several actions, from seizing its deposit in network 1 partially or completely, or expelling it from network 2, or a combination. In addition, all or part of the deposit may be passed on to the challenger who successfully demonstrated the deception, encouraging other challengers to carry out verification actions. The penalty is intended to be harsh, so that nodes will be strongly motivated to act honestly, not dishonestly. In this way, the process of challenging (which involves activity by network 1 with the corresponding consumption of resources) occurs rarely, resulting in even less frequent challenge computation by network 1, freeing up its resources and avoiding negative impact or congestion.

The fact that any node can perform the verification function is an important advantage over existing challenging systems. The security of existing systems is based on the assumption that if there is consensus among 51% of the nodes (or a subset of nodes accounting for 51% of the aggregate computational power of all nodes) when updating their records, no additional verification action is required. Instead, the invention replaces the huge (and non-scalable) processing load required to reach the 51% consensus by a simple verification protocol by only one honest challenger node. In particular, at least one node that does, in fact, participate in the DApp is expected, out of self-interest to monitor the operation of the DApp to ensure its security. That is, a DApp user has natural incentives to prevent other DApp users from acting maliciously.

In another aspect, an attempt is made to ensure that there are a minimum number of honest nodes by assigning the role of executor nodes and challenger nodes to those nodes that belong to the entity responsible for the DApp, the DApp manager, in particular. Additionally, if more challengers are incorporated, the security of the system against malicious attacks increases accordingly. More advantageously, the entire verification process is carried out without the need for DApp users to be permanently connected to network 1, for example, via an internet connection, nor do they have to monitor the activity of network 2, allowing normal use of the DApp without continuous internet connectivity.

As mentioned, the described enhanced DLT system can operate high-level data transaction DApps securely from at least one executor node (not necessarily honest) and at least one challenger node (necessarily honest). Instead, to increase the security of the system, the voluntary participation of a large number of nodes can be encouraged. In one aspect, node users are notified, via DApp messages, that by their simple participation the security of the application is increased. In another aspect, the participation of more challenger nodes can be incentivized by giving in return computational resources to perform the role of challenger voluntarily. In yet another aspect, the allocation of challenger node can be managed dynamically among the set of challengers. In one aspect, the first challenge received by the network verifier 1 is accepted. In another aspect, the next challenger node is randomly selected. In yet another aspect, a circular selection system of challenger nodes can be implemented, such as, for example, the well-known Round-robin. On the other hand, it may also be necessary to limit the number of participating nodes to a maximum, to ensure that the allocated incentives are not diluted so as to cease to be motivating to the participating community.

In another aspect, it is required that, when joining as an executing node, a significant deposit is made, either in computational resources, or another type of commitment, for example, economic, optionally mediated by smart contracts deployed in the network 1 (important, because then the DApp itself can act on these deposits programmatically, offering total confidence). On the one hand, this discourages executing nodes from acting dishonestly. On the other hand, it has the effect of incentivizing the participation of challengers who seek to obtain a reward for carrying out security actions, whose reward is derived from the deposits collected. Similarly, in another aspect, a deposit is required from the challenger nodes to prevent them from acting dishonestly.

In another aspect, rewards may be provided simply for performing the computations within the defined cyclic parameters, incentivizing the participation of a large number of executing nodes. The rewards may be varied, for example, in the form of computational resources, in economic form, in cryptocurrencies, or in crypto-assets.

In another aspect, the program code deployed in the network 1 comprises rules that define one or more crypto-assets that represent objects with which the users of the DApp carry out their actions, interacting with each other. Apart from the crypto-assets that each user owns in the DApp, new crypto-assets with particular properties that make them attractive to users are generated randomly or periodically. Incentives and rewards may also comprise these special crypto-assets.

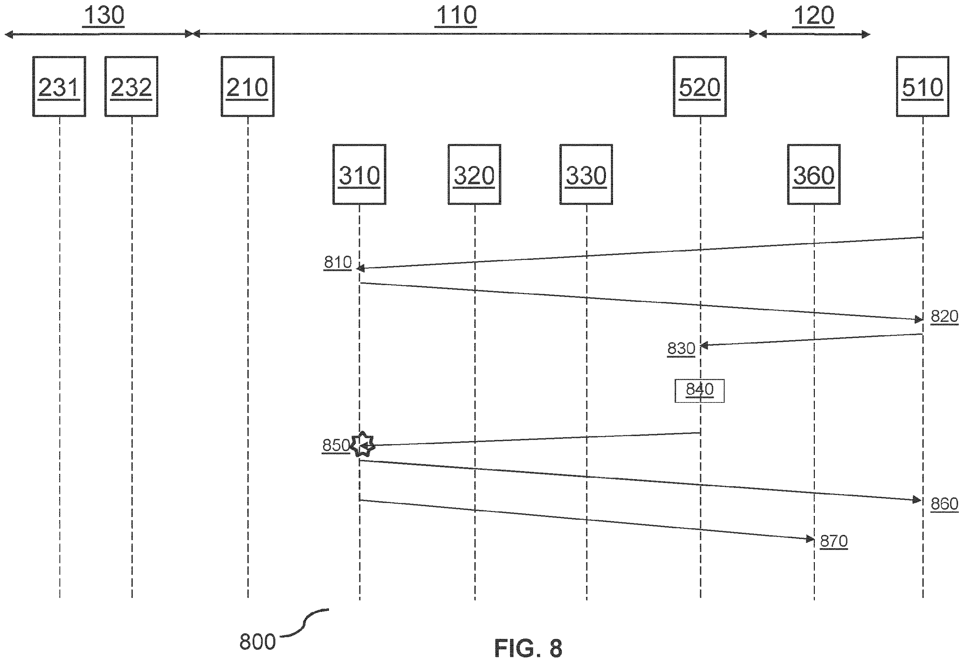

**FIG. 8** refers to a security method for the enhanced DLT system according to one embodiment of the invention. Any challenger 510 may decide to test the security of the system. To do so, it communicates with the controller to read 820 the stored computation results and starts a challenge process by issuing 830 a challenge comprising challenge information, for example, the index n, of the CR to be verified. The verifier 520, after performing certain checks, for example, the legitimacy of the challenging node, executes 840 the validation process. Once the verification has been carried out, and the verification is positive, that is, an irregularity has been identified, the verifier updates 850 the data and the status in the network memory 1. This in turn triggers the verifier, by means of the smart contracts programmed therein, to reward 860 the successful challenger node and penalize 870 the malicious node, which in this example is represented by the executing node 360.

This security phase does not require a large consumption of computational resources either, as can be seen, only the verification stage 830 and the update stage 850 require interacting with network 1, allowing a low consumption of computational resources to maintain the security of the enhanced DLT system. Given the planned incentives for the executing nodes, the number of challenges is expected to be minimal or non-existent. It is the operational phase that generates the most interactions and in which the most benefits will be achieved in terms of reducing the consumption of computational resources and interactions with network 1.

As described, the designed architecture allows to adapt the main computations required by a variety of DApps of a layer 2 network, and their interaction with the layer 1 network, in a dynamic way, adapting to the needs of each particular DApp. The solution comprises the data processing of network 2 in such a way that allows its continuous and high-frequency interaction with network 1. At the same time, by exchanging computing power parameters for data availability, a dynamic resource allocation optimally adapted to the properties of different DApps is enabled. In addition, the irregularity detection and correction process is performed automatically, regardless of the number of DApps or their execution properties.

Applications

There are multiple applications of the enhanced DLT system, and various technical advantages are obtained depending on the case.

In a first example application **(Example 1),** the application of the described system to a Massive Multiplayer Online Game (MMOG) DApp is considered, for example, a soccer manager game. This type of game involves multiple leagues (G groups), in which each user controls a team, which are segmented into g teams per league, and play matches that necessarily end with an outcome (actions a), in which at least one match is played per day (cycle interval t) for multiple days (day T). In this case players execute decisions regarding their team, players, coaches, player transfers between teams, and so on, and once a day, it is necessary to compute a plurality of simulations related to a match between two teams. An action a would be the result of playing a match between two users. As an example, to give an idea of the magnitude and volume of data generated, in a real case, there may be 15 million matches played between 30 million players every hour, requiring, worldwide, the computation and storage of the result of at least 360 million matches every day in the DLT network. This high degree of interaction can result in the daily transmission of thousands of virtual players. It is apparent to the skilled person in the art that existing DLT networks are completely incapable of making this type of DApp a reality, whereas the features of the invention allow very frequent updating of this immense amount of data in an optimized manner.

It is expected that virtual players, who are crypto-assets of the DApp, may be revalued depending on the success of their teams when facing each other in the league. This revaluation will generate motivation for some players to dishonestly benefit from the DApp by subjecting it to constant attacks. As described, the invention incorporates technical features that allow very frequent updating of this immense amount of data while maintaining a level of security that prevents attacks on the system from being successful.

In a second example application **(Example 2),** the application of the described system to a DApp of the Internet of Things, IOT environment, for example, a weather validator, is considered. This example addresses the need to store in network 1 immutable sensor reading values that other entities will need to verify and use. For example, storing in the DLT network those meteorological data (atmospheric temperature, atmospheric pressure, wind, earth tremors, and so on) that an insurance entity can reliably reference for its decision making regarding an incident it is managing. This type of application involves a list of areas (of G zones) in which sensors are segmented into groups (group g) and automatically output their measured data (actions a), in which one measurement is made per interval (cycle interval t) over multiple intervals (day T). In the simplest example, the computation required by the executors is to generate a summary of multiple actions and an action a would be to generate this result from multiple measurements. In another example, computation of an algorithm may be required based on all sensor data before generating the summary results. As an example, to give an idea of the magnitude and volume of data generated, in a real case, there may be 20 billion sensors emitting every hour, requiring, globally, the storage of the result of at least 480 billion data every day in the DLT network. It is apparent to the skilled person in the art that existing DLT networks are completely incapacitated to make this type of DApp a reality, whereas the features of the invention allow very frequent updating of this immense amount of data in an optimized manner.

In a third example application (**Example 3**), following the lessons of the network architecture of the enhanced DLT system described, a planner determines that there are two DApps, suppose like those in Example 1 and Example 2 described, that agree approximately in the update rate of their data in network 1. The scheduler makes this determination based on similarities in some interaction parameters between network 1 and network 2, such as, for example, the period of a cycle t, or the size of a data packet p, or the size of the maximum computation set, or the availability of executor nodes to perform computations, or a combination thereof. On the one hand, the network 2 executors of DApp 1, and on the other hand the network 2 executors of DApp 2, perform the required computations. At the end of a cycle *t,* or several cycles *T,* as the case may be, according to the scheduler's instructions, the results of both DApps are pooled to generate the final CR, and only one number that is the result of the combined encryption of both data sets is transmitted to network 1 for storage in the DLT network.

Using, as an example, Example 1 and Example 2 described above, at the end of a one-day-long interval cycle t, the results of all league matches played by all participating groups, with all data generated by all sensors in a city, would be combined and stored in the DLT network on a daily basis. Moreover, this immediate availability of results in a secure and immutable DLT network would allow other smart contracts from other DApps to use the corresponding information. In the case of Example 1, different players in different geographical locations worldwide can execute smart contract-based decisions regarding the MMOG management of their teams and players, as the triggering parameters of the smart contract in question are published on network 1. In the case of Example 2, DApps of insurance companies can make decisions on compensation payments based on incoming claims and whether weather parameters are consistent with, for example, a storm or earthquake in some part of the global geographical area.

Therefore, the inventors have developed different aspects implemented as a system, and corresponding procedure, of enhanced DLT involving a network architecture that allows the execution of DApps that generate huge amounts of data to be computed, and subsequently stored in the DLT network in an efficient and optimized way. The features of the invention allow the dynamic allocation of resources according to the properties of each DApp to be implemented. Additionally, they allow to do so with an efficient irregularity detection and correction process. Additionally, they allow further optimizations, such as the detection of DApps with similar properties to generate even more savings in terms of computational resources. This facilitates the generation and execution of DApps in the DLT environment, providing the missing support for them to become a reality.

Additional advantages of the system include the dedication of a single executing node to carry out the minimum operational phase. In addition, there is the dedication of a single honest challenger node for the security protocol. Furthermore, since the result data is available on the DLT network, this allows any challenger node to trigger a security process. In addition, the security protocol is simple and straightforward, facilitated by a simple irregularity detection and correction algorithm. In addition, the simple and straightforward protocol allows for an almost immediate finality of the verification process, that is, the data provided by the implementers can be considered correct after a relatively short time (for example, minutes). Furthermore, by allowing the interface between any type of existing layer 1 DLT network, it does not require the complex, time-consuming, costly and highly risky process of generating a new layer 1 DLT network. Furthermore, its operation does not require a constant Internet connection. Moreover, due to its properties, it opens the range of possible applications of the DLT network to an infinite number according to the needs of society, covering much more than carrying out DLT payments, for example, applications in Big Data, IOT, Web 3, MMOG, or any other environment that needs the trust provided by the immutability of data stored in the DLT network.

It is further understood that the described embodiments and aspects may be implemented by various means in hardware, software, firmware, middleware, microcode, or any combination thereof. Various aspects or features described may be implemented, on the one hand, as a method or procedure or function, and on the other hand, as an apparatus, device, system, or computer program accessible by any computer-readable device, carrier, or medium. The described procedures or algorithms can be implemented directly in hardware, in a software module executed by a processor, or a combination of the two.

The various media may comprise software modules resident in RAM memory, flash memory, ROM memory, EPROM memory, EEPROM memory, registers, hard disk, removable disk, a CD-ROM, or any other type of storage medium known in the art.

The various means may comprise logic blocks, modules, and circuits may be implemented or carried out by a general purpose processor, a digital signal processor (DSP), an application specific integrated circuit (ASIC), an field programmable gate array (FPGA), or other programmable logic, discrete gate or transistor logic devices, discrete hardware components, or any combination thereof designed to carry out the described functions. A general purpose processor may be a microprocessor, but alternatively, the processor may be a conventional processor, controller, microcontroller, or state machine.

The various media may comprise computer-readable media including, but not limited to, magnetic storage devices (for example, hard disks, floppy disks, magnetic strips, and the like), optical disks (for example, compact disks CD or versatile DVDs, and the like), smart cards, and temporary flash storage drives (for example, EPROM, pen card, key drive, and the like). Additionally, the described array of storage media may represent one or more devices and/or computer-readable media for storing information. The term computer-readable medium may comprise, without being limited thereto, a variety of media capable of storing, saving, or transporting instructions and/or data. Additionally, a computer program product may comprise a computer-readable medium with one or more instructions or operating codes for causing a computer to perform the described functions once executed on the computer.

What has been described comprises one or more embodiments by way of example. It is of course not possible to describe every conceivable combination, or permutation, of the components and/or methodologies for the purpose of describing the aforementioned embodiments. Instead, the skilled person will realize that many other combinations and permutations of various realizations are possible within the inventive concept after a straightforward and objective reading of this disclosure. Accordingly, it is intended to embrace all such alterations, modifications and variations that fall within the scope of the appended claims.

Further, the skilled person in the art would understand that the various embodiments may be implemented in hardware, software, firmware, middleware, microcode, or any combination thereof. Various aspects or features described may be implemented, on the one hand, as a method or procedure or function, and on the other hand, as an apparatus, device, system, or computer program accessible by any computer-readable device, carrier, or medium. The described procedures or algorithms may be implemented directly in hardware, in a software module executed by a processor, or a combination of the two. The various media may comprise software modules resident in RAM memory, flash memory, ROM memory, EPROM memory, EEPROM memory, registers, hard disk, removable disk, a CD-ROM, or any other type of storage medium known in the art.

The various means may comprise logic blocks, modules, and circuits may be implemented or carried out by a general purpose processor, a digital signal processor (DSP), an application specific integrated circuit (ASIC), a field programmable gate array (FPGA), or other programmable logic, discrete gate or transistor logic devices, discrete hardware components, or any combination thereof designed to carry out the described functions. A general purpose processor may be a microprocessor, but in the alternative, the processor may be a conventional processor, controller, microcontroller, state machine, or embedded processor.

The various media may comprise computer-readable media including, but not limited to, magnetic storage devices (for example, hard disks, floppy disks, magnetic strips, and the like), optical disks (for example, CD compact disks or versatile DVDs, and the like), smart cards, and temporary flash storage drives (for example, EPROMs). Additionally, the described array of storage media may represent one or more devices and/or computer-readable media for storing information. The term computer-readable medium may comprise, without being limited thereto, a variety of media capable of storing, saving, or transporting instructions and/or data. Additionally, a computer program product may comprise a computer-readable medium with one or more instructions or operating codes for causing a computer to perform the described functions once executed on the computer.

What has been described comprises several realizations by way of example. As it is neither possible nor feasible to describe in detail all the variety of combinations and permutations of the inventive concept which would give rise to a large number of realizations, the drafter understands that the person in the trade would derive, after a direct and objective reading of this disclosure, the various possible permutations and combinations, without departing from the general inventive concept described. Therefore, the principal embodiments have been described, it being understood that they comprise the other combinations, variations and modifications.

Certain additional aspects or examples are described in the following:

A programmable distributed ledger network configured to execute decentralized applications configured to communicate with at least one executing node, the network comprising distributed storage means and distributed processing means, the distributed processing means configured for storing, on the distributed storage means, communications related to interactions of at least one user; configured for, based on the interactions of the at least one user, determining a computations set reproducible by the programmable distributed ledger network and a cyclic parameter defining a computation cycle; configured for, at the end of each computation cycle defined by the cyclic parameter, storing in the distributed storage means at least one computation result carried out by the at least one executing node on the basis of the computations set.

The network, wherein the processing means are configured for determining a maximum computation set reproducible by the first network, and wherein the computation set is equal to or less in size than the maximum computation set. The network, wherein the processing means are configured for determining the computing set based on the properties of the decentralized application. The network, wherein the processing means are configured for determining the computing set based on a cluster of periodic computations of at least one decentralized application. The network, wherein the determined computation set comprises, among others, the set of simulations to be carried out, what level of information compression is required to be received in the computation result, or the mode of selection of executing nodes that will carry out the computations. The network, wherein the processing means are configured for, before accepting the request to store the computation result, identifying and validating the legitimacy of the at least one executing node. The network, wherein the processing means are configured for verifying that the request for storing the computation result is received at the correct cyclic interval. The network, wherein the processing means are configured for storing in the distributed storage means the received first computation result. The network, wherein the processing means are configured for storing in the distributed storage means a weighted average of a plurality of computation results received from multiple executing nodes. The network, wherein the processing means are configured for storing in the distributed storage means the computation result based on a cyclic selection of executing node. The network, wherein a challenger node is configured for challenging the at least one computing result stored in the storage means, level 1 challenge, during a security interval, and wherein the processing means comprises a digital verifier configured for performing a verification process upon receipt of the challenge to verify the validity of the at least one challenged computing result. The network, wherein the challenge issued by the challenging node comprises the data to identify the computation result, of level n, to be verified, and the data comprising the level immediately below that result, of level n+1, either a cycle summary or, in the case of the lowest possible level, the raw results. The network, wherein the digital verifier is configured for receiving challenges of level n=2, from at least one of the cycle summaries contributed by a challenger of level n=1, and so on, accepting challenges of level n >= 1, in all cases, triggering a new security interval. The network, wherein the digital verifier is configured for considering the executor's result, or challenge of a certain level, valid in the event that no challenge is received during the security interval, terminating the verification process for that computation cycle. The network, wherein the digital verifier is configured for considering the result of a challenger of level N to be valid in the event it determines that it corresponds to a challenge of the lowest possible level, in which case the verifier is configured for performing a re-computation of the programmed simulation based on this data, and compare the results obtained with those provided by the top level challenger N - 1 if N > 1, or with the result provided by the executor if N = 1. The network, wherein the digital verifier is configured for, in case of determining a challenge of level N > 1 as valid, considering the challenge of level N - 1 invalid, considering temporarily valid the result of the challenge N - 2, in case N > 2, or that of the executor, in case N = 2, and detonating a new security interval for the input of new challenges of level N - 1. The network, wherein the digital verifier is configured for, in case of determining a challenge of level N = 1 as valid, considering the executor result invalid, and accepting new results from executors. The network, wherein the digital verifier is configured for, in case of determining a level N = 1 challenge as valid, considering the result of the executor as invalid, and considering as correct result of the cycle the result obtained from the data provided in the level 1 challenge, either from the cycle summaries, or from the re-computation of the programmed simulation based on those data, and terminating the verification process. The network, wherein the challenge issued by the challenger node additionally comprises data for identifying the other computation results computed by the same executor node, and the digital verifier is configured for updating the storage media also with this data. The network, further configured for penalizing the executor node that generated the challenged data and reward the challenger node that demonstrated the security flaw.

An executor node for executing decentralized applications in a digital system of distributed ledgers comprising at least one executor node and at least one programmable distributed ledger network configured for executing decentralized applications comprising distributed storage means, the executor node comprising: digital means configured for obtaining communications related to interactions of at least one user; digital means configured for obtaining a computation set by reading the distributed storage means, wherein the computation set is reproducible by the first network; digital means configured for obtaining a cyclic parameter defining a computation cycle by reading the distributed storage means; digital means configured for, at the end of each computation cycle defined by the cyclic parameter, executing the computation set over the communications related to interactions of the at least one user and generate at least one computation result; and digital means configured for requesting storage of the at least one computation result on the distributed storage means.

The executor node, configured for executing the computations without any interaction with the distributed ledger network. The executor node, configured for periodically monitoring the distributed storage means for cyclic information updates. The executor node, configured for obtaining the interaction-related communications directly or by reading from the distributed storage means.

A digital system of distributed ledgers for executing decentralized applications, the system comprising: at least one programmable distributed ledger network configured for executing decentralized applications; and at least one executor node.

The system, further comprising a digital controller configured for, at an initial stage, configuring the processing means at the nodes of the distributed ledger network, and configuring the at least one executor node. The system, wherein the digital controller is configured for enabling on-demand downloading of an interface module for installation on at least one user node. The network or executor node or system, wherein the communications received from users are data related to interactions with the DApp. The network or executor node or system, wherein the cyclic parameter comprises at least one of a time interval, or a day parameter comprising at least one time interval, or a data size, or a packet parameter comprising at least one data size, or a number of users parameter, or a number of user groups parameter comprising at least one user per group, or a number of actions to be performed by each user parameter. The network or executor node or system, wherein the computation result comprises a set of raw data, or wherein the computation result comprises a cycle summary generated from an encryption of at least one set of raw data, or wherein the computation result comprises a cycle summary generated from an encryption of a plurality of encrypted results. The network or executor node or system, wherein the encryption is a SHA-3 hash function, or wherein the encryption is a Merkle tree root. The network or executor node or system, wherein the plurality of encryption results comprise concatenating the plurality of SHA-3 hash function results, or concatenating the plurality of Merkle tree roots. The network or executor node or system, wherein the processing means of the distributed ledger network are configured for determining a degree of similarity between at least two different decentralized applications, DApps, and coordinating, by determining the cyclic parameter, the generation by the at least one executor node of a combined computation result and its storage in the storage means of the distributed ledger network. The network or executor node or system, wherein the decentralized application deployed on the programmable distributed ledger network is a massive multiplayer online manager game of a team sport, and wherein the information to be stored represents matches played between users. The network or executor node or system, wherein the results of all matches of a match day of a league are updated per computation cycle. The network or executor node or system, wherein the results of all matches of a multi-league match day are updated per computation cycle. The network or executor node or system, wherein the decentralized application deployed on the programmable distributed ledger network is a weather validator, wherein the information to be stored represents data generated by a plurality of weather sensors collecting weather data. The network or executor node or system, wherein, at the end of each computation cycle, a set of computations are performed on sensor data collected during the last cycle and at least one computation result is generated.

A method of execution of at least one decentralized application in a programmable distributed ledger network configured to execute decentralized applications configured to communicate with at least one executing node, the network comprising distributed storage means and distributed processing means, the method comprising: storing, on the distributed storage means, communications related to interactions of at least one user; based on the interactions of the at least one user, determining a computations set reproducible by the programmable distributed ledger network and a cyclic parameter defining a computation cycle; at the end of each computation cycle defined by the cyclic parameter, storing, in the distributed storage means, at least one computation result carried out by the at least one executing node on the basis of the computations set.

The method, comprising determining a maximum computation set reproducible by the first network, and wherein the computation set is equal to or less in size than the maximum computation set. The method, comprising determining the computing set based on the properties of the decentralized application. The method, comprising determining the computing set based on a cluster of periodic computations of at least one decentralized application. The method, wherein the determined computation set comprises, among others, the set of simulations to be carried out, what level of information compression is required to be received in the computation result, or the mode of selection of executing nodes that will carry out the computations. The method, comprising, before accepting the request to store the computation result, identifying and validating the legitimacy of the at least one executing node. The method, comprising verifying that the request for storing the computation result is received at the correct cyclic interval. The method, comprising updating the first computation result received. The method, comprising updating a weighted average of a plurality of computation results received from multiple executing nodes. The method, comprising updating the computation result based on a cyclic selection of executing node. The method, comprising challenging at least one computing result stored in the storage means, level 1 challenge, during a security interval, and performing a verification process upon receipt of the challenge to verify the validity of the at least one challenged computing result. The method, wherein the challenge issued by the challenging node comprises the data to identify the computation result, of level n, to be verified, and the data comprising the level immediately below that result, of level n+1, either a cycle summary or, in the case of the lowest possible level, the raw results. The method, comprising receiving challenges of level n=2, from at least one of the cycle summaries contributed by a challenger of level n=1, and so on, accepting challenges of level n >= 1, in all cases, triggering a new security interval. The method, comprising considering the executor's result, or challenge of a certain level, valid in the event that no challenge is received during the security interval, terminating the verification process for that computation cycle. The method, comprising considering the result of a challenger of level N to be valid in the event it determines that it corresponds to a challenge of the lowest possible level, in which case the verifier is configured for performing a re-computation of the programmed simulation based on this data, and compare the results obtained with those provided by the top level challenger N - 1 if N > 1, or with the result provided by the executor if N = 1. The method, comprising, in case of determining a challenge of level N > 1 as valid, considering the challenge of level N - 1 invalid, considering temporarily valid the result of the challenge N - 2, in case N > 2, or that of the executor, in case N = 2, and detonating a new security interval for the input of new challenges of level N - 1. The method, comprising determining valid a challenge of level N = 1, considering the executor result invalid, and accepting new results from executors. The method, comprising determining a level N = 1 challenge as valid, considering the result of the executor as invalid, and considering as correct result of the cycle the result obtained from the data provided in the level 1 challenge, either from the cycle summaries, or from the re-computation of the programmed simulation based on those data, and terminating the verification process. The method, wherein the challenge issued by the challenger node additionally comprises data for identifying the other computation results computed by the same executor node, and the digital verifier is configured for updating the storage media also with this data. The method, further comprising penalizing the executor node that generated the challenged data and reward the challenger node that demonstrated the security flaw.

A method in an executor node for executing decentralized applications in a digital system of distributed ledgers comprising at least one executor node and at least one programmable distributed ledger network configured for executing decentralized applications comprising distributed storage means, the method comprising: obtaining communications related to interactions of at least one user; obtaining a computation set by reading the distributed storage means, wherein the computation set is reproducible by the first network; obtaining a cyclic parameter defining a computation cycle by reading the distributed storage means; at the end of each computation cycle defined by the cyclic parameter, executing the computation set over the communications related to interactions of the at least one user and generate at least one computation result; and requesting storage of the at least one computation result on the distributed storage means.

The method, comprising executing the computations without any interaction with the distributed ledger network. The method, comprising periodically monitoring the distributed storage means for cyclic information updates. The method, comprising obtaining the interaction-related communications directly or by reading from the distributed storage means.

A method in a digital system of distributed ledgers for executing decentralized applications, the method comprising: performing a method in at least one programmable distributed ledger network; and performing a method in at least one executing node.

The method, further comprising, at an initial stage, configuring the processing means at the nodes of the distributed ledger network, and configuring the at least one executor node. The method, comprising enabling on-demand downloading of an interface module for installation on at least one user node. The method, wherein the communications received from users are data related to interactions with the DApp. The method, wherein the cyclic parameter comprises at least one of a time interval, or a day parameter comprising at least one time interval, or a data size, or a packet parameter comprising at least one data size, or a number of users parameter, or a number of user groups parameter comprising at least one user per group, or a number of actions to be performed by each user parameter. The method, wherein the computation result comprises a set of raw data, or wherein the computation result comprises a cycle summary generated from an encryption of at least one set of raw data, or wherein the computation result comprises a cycle summary generated from an encryption of a plurality of encrypted results. The method, wherein the encryption is a SHA-3 hash function, or wherein the encryption is a Merkle tree root. The method, wherein the plurality of encryption results comprise concatenating the plurality of SHA-3 hash function results, or concatenating the plurality of Merkle tree roots. The method, comprising determining a degree of similarity between at least two different decentralized applications, DApps, and coordinating, by determining the cyclic parameter, the generation by the at least one executor node of a combined computation result and its storage in the storage means of the distributed ledger network. The method, wherein the decentralized application deployed on the programmable distributed ledger network is a massive multiplayer online manager game of a team sport, and wherein the information to be stored represents matches played between users. The method, wherein the results of all matches of a match day of a league are updated per computation cycle. The method, wherein the results of all matches of a multi-league match day are updated per computation cycle. The method, wherein the decentralized application deployed on the programmable distributed ledger network is a weather validator, wherein the information to be stored represents data generated by a plurality of weather sensors collecting weather data. The method, wherein, at the end of each computation cycle, a set of computations are performed on sensor data collected during the last cycle and at least one computation result is generated.

A computer program which comprises instructions, once executed on a processor, perform the method steps.

A computer readable medium which comprises instructions, once executed on a processor, for performing the method steps.

**Claims**

1. A programmable distributed ledger network configured to execute decentralized applications configured to communicate with at least one executing node, the network comprising distributed storage means and distributed processing means, the distributed processing means:

    configured for storing, on the distributed storage means, communications related to interactions of at least one user;
    configured for, based on the interactions of the at least one user, determining a computations set reproducible by the programmable distributed ledger network and a cyclic parameter defining a computation cycle;
    configured for, at the end of each computation cycle defined by the cyclic parameter, storing in the distributed storage means at least one computation result carried out by the at least one executing node on the basis of the computations set.

2. The network of claim 1, wherein the processing means are configured for determining a maximum computation set reproducible by the first network, and wherein the computation set is equal to or less in size than the maximum computation set.

3. The network of claim 2, wherein the processing means are configured for determining the computing set based on the properties of the decentralized application.

4. The network of claim 2, wherein the processing means are configured for determining the computing set based on a cluster of periodic computations of at least one decentralized application.

5. The network of claim 2, wherein the determined computation set comprises, among others, the set of simulations to be carried out, what level of information compression is required to be received in the computation result, or the mode of selection of executing nodes that will carry out the computations.

6. The network of claim 2, wherein the processing means are configured for, before accepting the request to store the computation result, identifying and validating the legitimacy of the at least one executing node.

7. The network of claim 6, wherein the processing means are configured for verifying that the request for storing the computation result is received at the correct cyclic interval.

8. The network of claim 6, wherein the processing means are configured for storing in the distributed storage means the received first computation result.

9. The network of claim 6, wherein the processing means are configured for storing in the distributed storage means a weighted average of a plurality of computation results received from multiple executing nodes.

10. The network of claim 6, wherein the processing means are configured for storing in the distributed storage means the computation result based on a cyclic selection of executing node.

11. The network of claim 2, wherein a challenger node is configured for challenging the at least one computing result stored in the storage means, level 1 challenge, during a security interval, and wherein the processing means comprises a digital verifier configured for performing a verification process upon receipt of the challenge to verify the validity of the at least one challenged computing result.

12. The network of claim 11, wherein the challenge issued by the challenging node comprises the data to identify the computation result, of level n, to be verified, and the data comprising the level immediately below that result, of level n+1, either a cycle summary or, in the case of the lowest possible level, the raw results.

13. The network of claim 12, wherein the digital verifier is configured for receiving challenges of level n=2, from at least one of the cycle summaries contributed by a challenger of level n=1, and so on, accepting challenges of level n >= 1, in all cases, triggering a new security interval.

14. The network of claim 13, wherein the digital verifier is configured for considering the executor's result, or challenge of a certain level, valid in the event that no challenge is received during the security interval, terminating the verification process for that computation cycle.

15. The network of claim 13, wherein the digital verifier is configured for considering the result of a challenger of level N to be valid in the event it determines that it corresponds to a challenge of the lowest possible level, in which case the verifier is configured for performing a re-computation of the programmed simulation based on this data, and compare the results obtained with those provided by the top level challenger N - 1 if N > 1, or with the result provided by the executor if N = 1.

16. The network of claim 15, wherein the digital verifier is configured for, in case of determining a challenge of level N > 1 as valid, considering the challenge of level N - 1 invalid, considering temporarily valid the result of the challenge N - 2, in case N > 2, or that of the executor, in case N = 2, and detonating a new security interval for the input of new challenges of level N - 1.

17. The network of claim 16, wherein the digital verifier is configured for, in case of determining a challenge of level N = 1 as valid, considering the executor result invalid, and accepting new results from executors.

18. The network of claim 17, wherein the digital verifier is configured for, in case of determining a level N = 1 challenge as valid, considering the result of the executor as invalid, and considering as correct result of the cycle the result obtained from the data provided in the level 1 challenge, either from the cycle summaries, or from the re-computation of the programmed simulation based on those data, and terminating the verification process.

19. The network of claim 12, wherein the challenge issued by the challenger node additionally comprises data for identifying the other computation results computed by the same executor node, and the digital verifier is configured for updating the storage media also with this data.

**20.** The network of claim 11, further configured for penalizing the executor node that generated the challenged data and reward the challenger node that demonstrated the security flaw.

**21.** An executor node for executing decentralized applications in a digital system of distributed ledgers comprising at least one executor node and at least one programmable distributed ledger network configured for executing decentralized applications comprising distributed storage means, the executor node comprising:

digital means configured for obtaining communications related to interactions of at least one user;
digital means configured for obtaining a computation set by reading the distributed storage means, wherein the computation set is reproducible by the first network;
digital means configured for obtaining a cyclic parameter defining a computation cycle by reading the distributed storage means;
digital means configured for, at the end of each computation cycle defined by the cyclic parameter, executing the computation set over the communications related to interactions of the at least one user and generate at least one computation result; and
digital means configured for requesting storage of the at least one computation result on the distributed storage means.

**22.** The executor node of claim 21, configured for executing the computations without any interaction with the distributed ledger network.

**23.** The executor node of claim 22, configured for periodically monitoring the distributed storage means for cyclic information updates.

**24.** The executor node of claim 21, configured for obtaining the interaction-related communications directly or by reading from the distributed storage means.

**25.** A digital system of distributed ledgers for executing decentralized applications, the system comprising:

at least one programmable distributed ledger network configured for executing decentralized applications according to claim 1; and
at least one executor node according to claim 21.

**26.** The system of claim 25, further comprising a digital controller configured for, at an initial stage, configuring the processing means at the nodes of the distributed ledger network, and configuring the at least one executor node.

**27.** The system of claim 25, wherein the digital controller is configured for enabling on-demand downloading of an interface module for installation on at least one user node.

**28.** The network or executor node or system of any one of the preceding claims, wherein the communications received from users are data related to interactions with the DApp.

**29.** The network or executor node or system of any one of the preceding claims, wherein the cyclic parameter comprises at least one of a time interval, or a day parameter comprising at least one time interval, or a data size, or a packet parameter comprising at least one data size, or a number of users parameter, or a number of user groups parameter comprising at least one user per group, or a number of actions to be performed by each user parameter.

**30.** The network or executor node or system of any one of the preceding claims, wherein the computation result comprises a set of raw data, or wherein the computation result comprises a cycle summary generated from an encryption of at least one set of raw data, or wherein the computation result comprises a cycle summary generated from an encryption of a plurality of encrypted results.

**31.** The network or executor node or system of claim 30, wherein the encryption is a SHA-3 hash function, or wherein the encryption is a Merkle tree root.

**32.** The network or executor node or system of claim 31, wherein the plurality of encryption results comprise concatenating the plurality of SHA-3 hash function results, or concatenating the plurality of Merkle tree roots.

**33.** The network or executor node or system of any one of the preceding claims, wherein the processing means of the distributed ledger network are configured for determining a degree of similarity between at least two different decentralized applications, DApps, and coordinating, by determining the cyclic parameter, the generation by the at least one executor node of a combined computation result and its storage in the storage means of the distributed ledger network.

**34.** The network or executor node or system of claim 33, wherein the decentralized application deployed on the programmable distributed ledger network is a massive multiplayer online manager game of a team sport, and wherein the information to be stored represents matches played between users.

**35.** The network or executor node or system of claim 34, wherein the results of all matches of a match day of a league are updated per computation cycle.

**36.** The network or executor node or system of claim 34, wherein the results of all matches of a multi-league match day are updated per computation cycle.

**37.** The network or executor node or system of claim 33, wherein the decentralized application deployed on the programmable distributed ledger network is a weather validator, wherein the information to be stored represents data generated by a plurality of weather sensors collecting weather data.

**38.** The network or executor node or system of claim 37, wherein, at the end of each computation cycle, a set of computations are performed on sensor data collected during the last cycle and at least one computation result is generated.

**39.** A method of execution of at least one decentralized application in a programmable distributed ledger network configured to execute decentralized applications configured to communicate with at least one executing node, the network comprising distributed storage means and distributed processing means, the method comprising:

storing, on the distributed storage means, communications related to interactions of at least one user;
based on the interactions of the at least one user, determining a computations set reproducible by the programmable distributed ledger network and a cyclic parameter defining a computation cycle;
at the end of each computation cycle defined by the cyclic parameter, storing, in the distributed storage means, at least one computation result carried out by the at least one executing node on the basis of the computations set.

**40.** The method of claim 39, comprising determining a maximum computation set reproducible by the first network, and wherein the computation set is equal to or less in size than the maximum computation set.

**41.** The method of claim 40, comprising determining the computing set based on the properties of the decentralized application.

**42.** The method of claim 40, comprising determining the computing set based on a cluster of periodic computations of at least one decentralized application.

**43.** The method of claim 40, wherein the determined computation set comprises, among others, the set of simulations to be carried out, what level of information compression is required to be received in the computation result, or the mode of selection of executing nodes that will carry out the computations.

**44.** The method of claim 40, comprising, before accepting the request to store the computation result, identifying and validating the legitimacy of the at least one executing node.

**45.** The method of claim 44, comprising verifying that the request for storing the computation result is received at the correct cyclic interval.

**46.** The method of claim 44, comprising updating the first computation result received.

**47.** The method of claim 44, comprising updating a weighted average of a plurality of computation results received from multiple executing nodes.

**48.** The method of claim 44, comprising updating the computation result based on a cyclic selection of executing node.

**49.** The method of claim 40, comprising challenging at least one computing result stored in the storage means, level 1 challenge, during a security interval, and performing a verification process upon receipt of the challenge to verify the validity of the at least one challenged computing result.

**50.** The method of claim 49, wherein the challenge issued by the challenging node comprises the data to identify the computation result, of level n, to be verified, and the data comprising the level immediately below that result, of level n+1, either a cycle summary or, in the case of the lowest possible level, the raw results.

**51.** The method of claim 50, comprising receiving challenges of level n=2, from at least one of the cycle summaries contributed by a challenger of level n=1, and so on, accepting challenges of level n >= 1, in all cases, triggering a new security interval.

**52.** The method of claim 51, comprising considering the executor's result, or challenge of a certain level, valid in the event that no challenge is received during the security interval, terminating the verification process for that computation cycle.

**53.** The method of claim 51, comprising considering the result of a challenger of level N to be valid in the event it determines that it corresponds to a challenge of the lowest possible level, in which case the verifier is configured for performing a re-computation of the programmed simulation based on this data, and compare the results obtained with those provided by the top level challenger N - 1 if N > 1, or with the result provided by the executor if N = 1.

**54.** The method of claim 53, comprising, in case of determining a challenge of level N > 1 as valid, considering the challenge of level N - 1 invalid, considering temporarily valid the result of the challenge N - 2, in case N > 2, or that of the executor, in case N = 2, and detonating a new security interval for the input of new challenges of level N - 1.

**55.** The method of claim 54, comprising determining valid a challenge of level N = 1, considering the executor result invalid, and accepting new results from executors.

**56.** The method of claim 55, comprising determining a level N = 1 challenge as valid, considering the result of the executor as invalid, and considering as correct result of the cycle the result obtained from the data provided in the level 1 challenge, either from the cycle summaries, or from the re-computation of the programmed simulation based on those data, and terminating the verification process.

**57.** The method of claim 49, wherein the challenge issued by the challenger node additionally comprises data for identifying the other computation results computed by the same executor node, and the digital verifier is configured for updating the storage media also with this data.

**58.** The method of claim 50, further comprising penalizing the executor node that generated the challenged data and reward the challenger node that demonstrated the security flaw.

**59.** A method in an executor node for executing decentralized applications in a digital system of distributed ledgers comprising at least one executor node and at least one programmable distributed ledger network configured for executing decentralized applications comprising distributed storage means, the method comprising:

　　obtaining communications related to interactions of at least one user;
　　obtaining a computation set by reading the distributed storage means, wherein the computation set is reproducible by the first network;
　　obtaining a cyclic parameter defining a computation cycle by reading the distributed storage means;
　　at the end of each computation cycle defined by the cyclic parameter, executing the computation set over the communications related to interactions of the at least one user and generate at least one computation result; and
　　requesting storage of the at least one computation result on the distributed storage means.

**60.** The method of claim 59, comprising executing the computations without any interaction with the distributed ledger network.

**61.** The method of claim 60, comprising periodically monitoring the distributed storage means for cyclic information updates.

**62.** The method of claim 59, comprising obtaining the interaction-related communications directly or by reading from the distributed storage means.

**63.** A method in a digital system of distributed ledgers for executing decentralized applications, the method comprising:

performing a method according to claim 39 in at least one programmable distributed ledger network; and
performing a method according to claim 59 in at least one executing node.

**64.** The method of claim 63, further comprising, at an initial stage, configuring the processing means at the nodes of the distributed ledger network, and configuring the at least one executor node.

**65.** The method of claim 64, comprising enabling on-demand downloading of an interface module for installation on at least one user node.

**66.** The method of any of claims from claim 39 onwards, wherein the communications received from users are data related to interactions with the DApp.

**67.** The method of any of claims from claim 39 onwards, wherein the cyclic parameter comprises at least one of a time interval, or a day parameter comprising at least one time interval, or a data size, or a packet parameter comprising at least one data size, or a number of users parameter, or a number of user groups parameter comprising at least one user per group, or a number of actions to be performed by each user parameter.

**68.** The method of any of claims from claim 39 onwards, wherein the computation result comprises a set of raw data, or wherein the computation result comprises a cycle summary generated from an encryption of at least one set of raw data, or wherein the computation result comprises a cycle summary generated from an encryption of a plurality of encrypted results.

**69.** The method of claim 68, wherein the encryption is a SHA-3 hash function, or wherein the encryption is a Merkle tree root.

**70.** The method of claim 69, wherein the plurality of encryption results comprise concatenating the plurality of SHA-3 hash function results, or concatenating the plurality of Merkle tree roots.

**71.** The method of any of claims from claim 39 onwards, comprising determining a degree of similarity between at least two different decentralized applications, DApps, and coordinating, by determining the cyclic parameter, the generation by the at least one executor node of a combined computation result and its storage in the storage means of the distributed ledger network.

**72.** The method of claim 71, wherein the decentralized application deployed on the programmable distributed ledger network is a massive multiplayer online manager game of a team sport, and wherein the information to be stored represents matches played between users.

**73.** The method of claim 72, wherein the results of all matches of a match day of a league are updated per computation cycle.

**74.** The method of claim 72, wherein the results of all matches of a multi-league match day are updated per computation cycle.

**75.** The method of claim 71, wherein the decentralized application deployed on the programmable distributed ledger network is a weather validator, wherein the information to be stored represents data generated by a plurality of weather sensors collecting weather data.

**76.** The method of claim 75, wherein, at the end of each computation cycle, a set of computations are performed on sensor data collected during the last cycle and at least one computation result is generated.

**77.** A computer program which comprises instructions, once executed on a processor, for performing the method steps of any one of claims 39 to 76.

78. A computer readable medium which comprises instructions, once executed on a processor, for performing the method steps of any one of claims 39 to 76.

FIG. 1

FIG. 2

**FIG. 3A**

**FIG. 3B**

**FIG. 3**

EP 3 979 551 A1

410

115

110

120

210

231

232

400

**FIG. 4**

FIG. 5A

FIG. 5B

FIG. 5

FIG. 6

FIG. 7

FIG. 8

FIG. 9

FIG. 10

1000
1010 → 1020 → 1030 → 1040
1022
1024

N = 1

n = 1 [1110] [1110] [1110] [1110]

**FIG. 11A**

N = 2

n = 1 [1120] [1120] [1120] [1120]

n = 2 [1110] [1110] [1110] [1110]

**FIG. 11B**

N = 3

n = 1 [1130]

n = 2 [1120] [1120] [1120] [1120]

n = 3 [1110] [1110] [1110] [1110]

**FIG. 11C**

N = 4

n = 1 [1140]

n = 2 [ ] - - - - - [ ]

n = 3 [ ][ ][ ][ ] - - [ ][ ][ ][ ]

n = N [ ][ ][ ][ ] - - [ ][ ][ ][ ]

**FIG. 11D**

**FIG. 11**

# EP 3 979 551 A1

<table>
<tr><td colspan="2" align="center">**INTERNATIONAL SEARCH REPORT**</td><td>International application No.<br>PCT/ES2020/070111</td></tr>
</table>

**A. CLASSIFICATION OF SUBJECT MATTER**

*H04L9/00* (2006.01)

According to International Patent Classification (IPC) or to both national classification and IPC

**B. FIELDS SEARCHED**

Minimum documentation searched (classification system followed by classification symbols)
H04L

Documentation searched other than minimum documentation to the extent that such documents are included in the fields searched

Electronic data base consulted during the international search (name of data base and, where practicable, search terms used)

EPODOC, INVENES, WPI, INTERNET

**C. DOCUMENTS CONSIDERED TO BE RELEVANT**

| Category* | Citation of document, with indication, where appropriate, of the relevant passages | Relevant to claim No. |
|---|---|---|
| X | MOLINA-JIMÉNEZ, CARLOS et al.. Implementation of Smart Contracts Using Hybrid Architectures with On- and Off-Blockchain Components. Sc '18 Conference Paper, 01/01/2019 [on line][retrieved the 28/10/2020]. Retrieved from <URL: https://www.researchgate.net/publication/329561864>, <DOI: 10.1109/SC2.2018.00018> figure 2, Pages 2-6 | 1-78 |
| X | TAI, STEFAN. On or Off the Blockchain? Insights on Off-Chaining Computation and Data. Conference Paper, 01/10/2017 [on line][retrieved on 28/10/2020]. Retrieved from <URL: https://www.researchgate.net/publication/319416136>, <DOI: DOI: 10.1007/978-3-319-67262-5_1> Epígrafes 3, 4.4. | 1-78 |
| A | US 2020027315 A1 (COTTON JUSTIN D) 23/01/2020, | 1-78 |

☒ Further documents are listed in the continuation of Box C.       ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 10/11/2020 | **(11/11/2020)** |

| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>F. Diaz Madrigal<br><br><br>Telephone No. 91 3493287 |

Form PCT/ISA/210 (second sheet) (January 2015)

## INTERNATIONAL SEARCH REPORT

| International application No. |
| --- |
| PCT/ES2020/070111 |

| C (continuation). | DOCUMENTS CONSIDERED TO BE RELEVANT | |
| --- | --- | --- |
| Category * | Citation of documents, with indication, where appropriate, of the relevant passages | Relevant to claim No. |
| A | KR 102000259B B1 (KIM MI KYUNG) 15/07/2019, | 1-78 |

Form PCT/ISA/210 (continuation of second sheet) (January 2015)

## INTERNATIONAL SEARCH REPORT

| | International application No. |
|---|---|
| Information on patent family members | PCT/ES2020/070111 |

| Patent document cited in the search report | Publication date | Patent family member(s) | Publication date |
|---|---|---|---|
| US2020027315 A1 | 23.01.2020 | NONE | |
| KR102000259B B1 | 15.07.2019 | NONE | |

Form PCT/ISA/210 (patent family annex) (January 2015)